(19) Europäisches Patentamt
European Patent Office
Office européen des brevets

(11) **EP 4 525 488 A1**

(12) **EUROPEAN PATENT APPLICATION**
published in accordance with Art. 153(4) EPC

(43) Date of publication:
**19.03.2025 Bulletin 2025/12**

(21) Application number: **23811111.6**

(22) Date of filing: **24.05.2023**

(51) International Patent Classification (IPC):
**H04W 4/02** $^{(2018.01)}$

(52) Cooperative Patent Classification (CPC):
**H04W 4/02**

(86) International application number:
**PCT/CN2023/096138**

(87) International publication number:
**WO 2023/227041 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.05.2022 CN 202210582254**
**02.08.2022 CN 202210922472**

(71) Applicant: **Huawei Technologies Co., Ltd.**
**Shenzhen, Guangdong 518129 (CN)**

(72) Inventors:
• **GUO, Ziyang**
  **Shenzhen, Guangdong 518129 (CN)**
• **ZHOU, Zhengchun**
  **Chengdu, Sichuan 611756 (CN)**
• **LIU, Peng**
  **Shenzhen, Guangdong 518129 (CN)**
• **YANG, Yang**
  **Chengdu, Sichuan 611756 (CN)**
• **YANG, Xun**
  **Shenzhen, Guangdong 518129 (CN)**

(74) Representative: **Grünecker Patent- und Rechtsanwälte**
**PartG mbB**
**Leopoldstraße 4**
**80802 München (DE)**

(54) **COMMUNICATION METHOD AND APPARATUS**

(57) This application provides a communication method and apparatus, which may be applied to a UWB system. The method includes: A first device obtains a target initial value of an LFSR based on N, M, and K and an identifier of the first device, where N is a quantity of fragments included in a target signal sent by the first device to a second device, M is a quantity of time units included in a time period in which each fragment is transmitted, and K is a quantity of first devices or K is a quantity of second devices. Different first devices may each obtain a preferred initial value of the LFSR. The first device determines, based on the target initial value and a characteristic polynomial, a time unit for transmitting each fragment, where the time unit for transmitting each fragment is one of M time units corresponding to the fragment. An appropriate time unit for transmitting a fragment of a user is determined based on the preferred initial value of the LFSR. In this way, a quantity of collisions between fragments of users is minimized, and a probability of mutual interference between the users is reduced.

A first device obtains a target initial value of an LFSR based on N, M, and K and an identifier of the first device — S501

The first device determines, based on the target initial value and a characteristic polynomial, a time unit for transmitting each fragment — S502

FIG. 5

## Description

This application claims priority to Chinese Patent Application No. 202210582254.3, filed with the China National Intellectual Property Administration on May 26, 2022 and entitled "COMMUNICATION METHOD AND APPARATUS", and claims priority to Chinese Patent Application No. 202210922472.7, filed with the China National Intellectual Property Administration on August 2, 2022 and entitled "COMMUNICATION METHOD AND APPARATUS", both of which are incorporated herein by reference in their entireties.

## TECHNICAL FIELD

This application relates to the field of communication technologies, and in particular, to a communication method and apparatus.

## BACKGROUND

Currently, an ultra-wideband (ultra-wideband, UWB) technology is widely used in positioning scenarios (for example, positioning of factory personnel, positioning of goods in logistics and warehousing, and intelligent sensing of a vehicle door lock) due to many advantages such as a large bandwidth and high resolution. However, transmit energy of the UWB device is limited by regulations. Therefore, to improve a ranging range, a UWB device usually transmits a ranging signal by using a UWB fragment transmission technology, to be specific, divides one ranging signal into a plurality of fragments for transmission.

However, interference may exist in a UWB system. For example, when ranging links of a plurality of users operating on a same channel in the UWB system perform ranging at the same time, the users interfere with each other because fragments of different users may overlap in time domain. Alternatively, in a narrowband-assisted UWB fragment transmission technology, interference may exist between systems coexisting on a narrowband.

## SUMMARY

This application provides a communication method and apparatus, to reduce a probability of mutual interference between a plurality of users in a UWB system.

To achieve the foregoing objective, the following technical solutions are used in this application.

According to a first aspect, this application provides a communication method. The method may be performed by a first device, may be performed by a component of the first device, for example, a processor, a chip, or a chip system of the first device, or may be implemented by a logic module or software that can implement all or some functions of the first device. In this application, an example in which the first device performs the method is used for description. For example, the first device may be a ranging initiating device, and a second device may be a ranging responding device. Alternatively, the first device may be a ranging responding device, and the second device may be a ranging initiating device. The method includes: A first device obtains a target initial value of a linear feedback shift register LFSR based on N, M, and K and an identifier of the first device, where N is a quantity of fragments included in a target signal sent by the first device to a second device, M is a quantity of time units included in a time period in which each fragment is transmitted, K is a quantity of first devices or K is a quantity of second devices, and N, M, and K are all positive integers; and the first device determines, based on the target initial value and a characteristic polynomial, a time unit for transmitting each fragment, where an order of the characteristic polynomial is L, L is a positive integer, and the time unit for transmitting each fragment is one of M time units corresponding to the fragment.

It may be understood that time hopping performance depends on correlation between time hopping sequences of different users. For the different users, the time hopping sequences corresponding to the users may be different. A time hopping sequence corresponding to a user may be used to transmit all fragments of the user in corresponding time units. The correlation of the time hopping sequence is related to the initial value of the LFSR. Therefore, for each user, a preferred initial value of the LFSR may be obtained by using the foregoing technical solution, to determine an appropriate time unit for performing time hopping transmission on a fragment of the user. It can be ensured that the time hopping sequences of the different users are orthogonal as much as possible, and further, it can be ensured that a quantity of collisions between fragments of the users is minimized, and a probability of mutual interference between the plurality of users can be greatly reduced.

In a possible design, that a first device obtains a target initial value of an LFSR based on N, M, and K and an identifier of the first device includes: The first device determines a target initial value table based on N, M, and K, where the target initial value table includes at least two initial values; and the first device obtains the target initial value based on the identifier of the first device and the target initial value table.

In a possible design, that the first device obtains the target initial value based on the identifier of the first device and the target initial value table includes: The first device performs a modulo operation on the identifier of the first device and a size of the target initial value table, to obtain the target initial value, where the size of the target initial value table is a quantity of initial values included in the target initial value table. Because identifiers of different first devices are different, based on this design, it can be ensured at least that the different first devices each obtain a different initial value of the LFSR, so that when a time unit is determined, for the user based on the initial value, for performing the time hopping transmission, the quantity of collisions between the fragments of the users is minimized, and the probability of the mutual interference between the plurality of users is reduced.

In a possible design, that the first device determines, based on the target initial value and a characteristic polynomial, the time unit for transmitting each fragment includes: The first device generates, based on the target initial value and the characteristic polynomial, a first quantity of binary random numbers corresponding to each fragment; and the first device converts the first quantity of binary random numbers corresponding to each fragment into a number with a target base, where the number with the target base corresponding to each fragment is used to determine the time unit for transmitting each fragment. In a possible example, the number with the target base corresponding to each fragment is a sequence number of the time unit for transmitting each fragment. Based on this design, a sequence number of a time hopping time unit of each fragment may be obtained, and a corresponding fragment is directly transmitted based on a sequence number of each time unit.

In a possible design, the first quantity is $\log_2 M$, and the number with the target base is a base-m number.

In a possible design, that the first device determines, based on the target initial value and a characteristic polynomial, the time unit for transmitting each fragment includes: The first device generates, based on the target initial value and the characteristic polynomial, a second quantity of binary random numbers corresponding to N fragments; and the first device determines, based on the second quantity of binary random numbers and sequence numbers of the M time units, the time unit for transmitting each fragment.

In a possible design, a value of the second quantity is $N+L$-1; and that the first device determines, based on the second quantity of binary random numbers and sequence numbers of the M time units, the time unit for transmitting each fragment includes: The first device generates a first vector based on the second quantity of binary random numbers, where the first vector includes N integers greater than or equal to 0 and less than or equal to N-1; the first device generates a second vector based on the sequence numbers of the M time units, where the second vector includes N elements; and the first device determines, based on the first vector and the second vector, the time unit for transmitting each fragment.

In a possible design, that the first device determines, based on the first vector and the second vector, the time unit for transmitting each fragment includes: The first device exchanges an $a^{th}$ bit of the second vector with a $b^{th}$ bit of the second vector, where b is a value of an $a^{th}$ bit of the first vector, a value of a ranges from 0 to N-1, and a is an integer; and the first device determines, based on an element in an exchanged second vector, the time unit for transmitting each fragment. In a possible example, each element in the second vector is the sequence number of the time unit for transmitting each fragment of the first device. Based on this design, the time hopping sequence can be directly obtained, and the fragment of the first device is transmitted based on the time hopping sequence.

In a possible design, before the first device determines the target initial value table based on N, M, and K, the method further includes: The first device determines at least one initial value of the LFSR based on the order of the characteristic polynomial; the first device generates, based on the at least one initial value of the LFSR, a sequence corresponding to each initial value; and the first device generates the target initial value table based on the at least one initial value of the LFSR, the sequence corresponding to each initial value, and a preset threshold, where the preset threshold indicates a maximum quantity of collisions of fragments corresponding to any two target links, and the target link is a communication link corresponding to any one of K first devices.

In a possible design, that the first device generates, based on the at least one initial value of the LFSR, a sequence corresponding to each initial value includes: The first device generates, based on the at least one initial value of the LFSR and the characteristic polynomial, a third quantity of binary random numbers corresponding to each initial value; the first device converts the third quantity of binary random numbers corresponding to each initial value into a number with a target base corresponding to each initial value; and the first device generates, based on the number with the target base corresponding to each initial value, the sequence corresponding to each initial value.

In a possible design, a value of the third quantity is $N*\log_2 M$, the number with the target base is the base-m number, and the sequence corresponding to each initial value includes N integers greater than or equal to 0 and less than or equal to M-1.

In a possible design, that the first device generates, based on the at least one initial value of the LFSR, a sequence corresponding to each initial value includes: The first device generates, based on the at least one initial value of the LFSR and the characteristic polynomial, a second quantity of binary random numbers corresponding to each initial value; and the first device generates, based on the second quantity of binary random numbers corresponding to each initial value and the sequence numbers of the M time units, the sequence corresponding to each initial value.

In a possible design, a value of the second quantity is $N+L$-1; and that the first device generates, based on the second quantity of binary random numbers corresponding to each initial value and the sequence numbers of the M time units, the sequence corresponding to each initial value includes: The first device generates, based on the second quantity of binary random numbers corresponding to each initial value, a first vector corresponding to each initial value, where the first vector corresponding to each initial value includes N integers greater than or equal to 0 and less than or equal to N-1; the first device generates a second vector based on the sequence numbers of the M time units, where the second vector includes N elements; and the first device generates, based on the first vector corresponding to each initial value and the second vector, the sequence corresponding to each initial value.

In a possible design, that the first device generates, based on the first vector corresponding to each initial value and the second vector, the sequence corresponding to each initial value includes: The first device exchanges an $a^{th}$ bit of the second vector with a $b^{th}$ bit of the second vector, where b is a value of an $a^{th}$ bit of the first vector corresponding to each initial value, a value of a ranges from 0 to N-1, a is an integer, and an exchanged second vector corresponding to each initial value is the sequence corresponding to each initial value.

In a possible design, that the first device generates the target initial value table based on the at least one initial value of the LFSR, the sequence corresponding to each initial value, and a preset threshold includes: The first device determines a first sequence set based on the sequence corresponding to each initial value, where a maximum Hamming autocorrelation value of any sequence in the first sequence set is less than or equal to the preset threshold; the first device determines a second sequence set based on the first sequence set, where a maximum Hamming cross-correlation value between any two sequences in the second sequence set is less than or equal to the preset threshold; and if a quantity of sequences included in the second sequence set is greater than or equal to K, the first device generates the target initial value table based on an initial value corresponding to each sequence in the second sequence set; or if a quantity of sequences included in the second sequence set is less than K, the first device increases a value of the preset threshold. It may be understood that when the second sequence set is searched for from the sequence corresponding to each initial value, search space is large. Based on this design, a sequence with good correlation can be quickly obtained.

$$TH = floor(\frac{N}{M})$$

In a possible design, an initial value of the preset threshold meets the following formula:          , where TH is the initial value of the preset threshold, and floor indicates rounding down.

In a possible design, a value of N is a fixed value. Based on this design, the first device may also directly obtain the initial value of the LFSR based on M, K, and the identifier of the first device.

In a possible design, before the first device obtains the target initial value of the LFSR based on N, M, and K and the identifier of the first device, the method further includes: The first device sends a target message to the second device, where the target message indicates the value of N, and/or a value of M, and/or a value of K.

In a possible design, the identifier of the first device is an index of a narrowband channel corresponding to the target message.

In a possible design, the characteristic polynomial is any one of the following: $x^9 + x^5 + 1$ and $x^{15} + x + 1$. Based on this design, the characteristic polynomial that is in a protocol is directly used. In this way, a small change is made to the protocol. In addition, for a chip that uses the characteristic polynomial, the method provided in this embodiment of this application may be directly used, and a manufacturer does not need to redesign and produce a chip. This is easy to implement and has low complexity.

In a possible design, the method further includes: The first device determines a first index and a block list, and determines, based on the first index and the block list, a target channel corresponding to a first time unit, where the block list includes an index of an unavailable channel in a target frequency band, and the target frequency band is a frequency band supported by the first device. The target channel is used to send a first radio frame to the second device, and the first radio frame and the target signal are located in a same ranging round.

According to a second aspect, this application provides a communication method. The method may be performed by a first device, may be performed by a component of the first device, for example, a processor, a chip, or a chip system of the first device, or may be implemented by a logic module or software that can implement all or some functions of the first device. In this application, an example in which the first device performs the method is used for description. For example, the first device may be a ranging initiating device, and a second device may be a ranging responding device. Alternatively, the first device may be a ranging responding device, and the second device may be a ranging initiating device. The method includes: A first device determines a first index and a block list; and determines, based on the first index and the block list, a target channel corresponding to a first time unit. The block list includes an index of an unavailable channel in a target frequency band, and the target frequency band is a frequency band supported by the first device.

Based on this solution, the first device may determine the block list, to learn of the index of the unavailable channel in the target frequency band, and determine, based on the index of the unavailable channel, the target channel used to send a first radio frame in the first time unit. For example, the target channel corresponding to the first time unit may exclude the channel indicated in the block list, thereby reducing interference between systems coexisting on a narrowband.

In a possible design, the method further includes: The first device determines a target channel corresponding to a second time unit, where the target channel corresponding to the second time unit is used to send a second radio frame to the second device.

In a possible design, the method further includes: The first device determines a target channel corresponding to a third time unit, where the target channel corresponding to the third time unit is used to receive a third radio frame from the second device.

In a possible design, at least two of the target channel corresponding to the first time unit, the target channel corresponding to the second time unit, and the target channel corresponding to the third time unit are different; and/or at least two of the first time unit, the second time unit, and the third time unit are located in a same ranging round.

Based on this possible design, radio frames may be received and sent over different channels in a plurality of time units located in the same ranging round. Therefore, flexibility is high, and interference between a plurality of ranging links can be further reduced.

In a possible design, that a first device determines a first index includes: The first device determines a first initial value of a linear feedback shift register LFSR, and determines the first index based on the first initial value and the LFSR.

Based on this possible design, when there are a plurality of ranging links in the UWB system, ranging devices on the ranging links determine first indexes by using the LFSR, so that the ranging devices on the plurality of ranging links can obtain good cross-correlation. This reduces a possibility that ranging devices on different ranging links select a same channel to transmit radio frames, and reduces a collision of radio frames, thereby reducing the interference between the ranging links.

In a possible design, the first initial value is determined by at least one of the following: a media access control MAC address of the first device, a clock of the first device, a MAC address of the second device, a clock of the second device, an index of the first time unit, an index of a ranging round in which the first time unit is located, or an index of a ranging block in which the first time unit is located.

In a possible design, that the first device determines, based on the first index and the block list, a target channel corresponding to a first time unit includes: If the block list does not include the first index, the first device determines the first index as an index of the target channel corresponding to the first time unit; or if the block list includes the first index, the first device determines, based on a second index and the block list, the index of the target channel corresponding to the first time unit, where the second index is determined based on a second initial value.

Based on this possible design, the unavailable channel can be excluded based on the block list, so that the target channel corresponding to the first time unit is a channel that is not occupied by another coexistent system or has little interference, thereby reducing the interference between the coexistent systems and improving ranging efficiency.

In a possible design, the second initial value is determined based on the first initial value, and/or the second initial value is greater than the first initial value.

In a possible design, that a first device determines a first index includes: The first device determines the first index according to an advanced encryption standard AES algorithm.

In a possible design, that the first device determines, based on the first index and the block list, a target channel corresponding to a first time unit includes: If the block list does not include the first index, the first device determines the first index as an index of the target channel corresponding to the first time unit; or if the block list includes the first index, the first device determines, based on a second index and the block list, the index of the target channel corresponding to the first time unit, where the second index is determined according to the AES algorithm.

According to a third aspect, this application provides a communication apparatus. The communication apparatus is configured to implement the foregoing methods. The communication apparatus may be the first device according to the first aspect or the second aspect, or an apparatus included in the first device, for example, a chip. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions. In a possible design, the communication apparatus may include a processing module (or referred to as a processing unit).

When the communication apparatus is configured to implement the method according to the first aspect and any one of the designs of the first aspect,

the processing module is configured to obtain a target initial value of an LFSR based on N, M, and K and an identifier of the communication apparatus, where N is a quantity of fragments included in a target signal sent by the communication apparatus to a second device, M is a quantity of time units included in a time period in which each fragment is transmitted, K is a quantity of communication apparatuses or K is a quantity of second devices, and N, M, and K are all positive integers; and the processing module is further configured to determine, based on the target initial value and a characteristic polynomial, a time unit for transmitting each fragment, where an order of the characteristic polynomial is L, L is a positive integer, and the time unit for transmitting each fragment is one of M time units corresponding to the fragment.

In a possible design, the processing module is further configured to determine a target initial value table based on N, M, and K, where the target initial value table includes at least two initial values; and the processing module is further configured to obtain the target initial value based on the identifier of the communication apparatus and the target initial value table.

In a possible design, the processing module is further configured to perform a modulo operation on the identifier of the communication apparatus and a size of the target initial value table, to obtain the target initial value, where the size of the target initial value table is a quantity of initial values included in the target initial value table.

In a possible design, the processing module is further configured to generate, based on the target initial value and the characteristic polynomial, a first quantity of binary random numbers corresponding to each fragment; and the processing module is further configured to convert the first quantity of binary random numbers corresponding to each fragment into a number with a target base, where the number with the target base corresponding to each fragment is used to determine the time unit for transmitting each fragment.

In a possible design, the first quantity is $\log_2 M$, and the number with the target base is a base-m number.

In a possible design, the processing module is further configured to generate, based on the target initial value and the characteristic polynomial, a second quantity of binary random numbers corresponding to N fragments; and the processing module is further configured to determine, based on the second quantity of binary random numbers and sequence numbers of the M time units, the time unit for transmitting each fragment.

In a possible design, a value of the second quantity is $N+L$-1; and the processing module is further configured to generate a first vector based on the second quantity of binary random numbers, where the first vector includes N integers greater than or equal to 0 and less than or equal to N-1; the processing module is further configured to generate a second vector based on the sequence numbers of the M time units, where the second vector includes N elements; and the processing module is further configured to determine, based on the first vector and the second vector, the time unit for transmitting each fragment.

In a possible design, the processing module is further configured to exchange an $a^{th}$ bit of the second vector with a $b^{th}$ bit of the second vector, where b is a value of an $a^{th}$ bit of the first vector, a value of a ranges from 0 to N-1, and a is an integer; and the processing module is further configured to determine, based on an element in an exchanged second vector, the time unit for transmitting each fragment.

In a possible design, the processing module is further configured to determine at least one initial value of the LFSR based on the order of the characteristic polynomial; the processing module is further configured to generate, based on the at least one initial value of the LFSR, a sequence corresponding to each initial value; and the processing module is further configured to generate the target initial value table based on the at least one initial value of the LFSR, the sequence corresponding to each initial value, and a preset threshold, where the preset threshold indicates a maximum quantity of collisions of fragments corresponding to any two target links, and the target link is a communication link corresponding to any one of K communication apparatuses.

In a possible design, the processing module is further configured to generate, based on the at least one initial value of the LFSR and the characteristic polynomial, a third quantity of binary random numbers corresponding to each initial value; the processing module is further configured to convert the third quantity of binary random numbers corresponding to each initial value into a number with a target base corresponding to each initial value; and the processing module is further configured to generate, based on the number with the target base corresponding to each initial value, the sequence corresponding to each initial value.

In a possible design, a value of the third quantity is $N*\log_2 M$, the number with the target base is the base-m number, and the sequence corresponding to each initial value includes N integers greater than or equal to 0 and less than or equal to M-1.

In a possible design, the processing module is further configured to generate, based on the at least one initial value of the LFSR and the characteristic polynomial, a second quantity of binary random numbers corresponding to each initial value; and the processing module is further configured to generate, based on the second quantity of binary random numbers corresponding to each initial value and the sequence numbers of the M time units, the sequence corresponding to each initial value.

In a possible design, a value of the second quantity is $N+L$-1; and the processing module is further configured to generate, based on the second quantity of binary random numbers corresponding to each initial value, a first vector corresponding to each initial value, where the first vector corresponding to each initial value includes N integers greater than or equal to 0 and less than or equal to N-1; the processing module is further configured to generate a second vector based on the sequence numbers of the M time units, where the second vector includes N elements; and the processing module is further configured to generate, based on the first vector corresponding to each initial value and the second vector, the sequence corresponding to each initial value.

In a possible design, the processing module is further configured to exchange an $a^{th}$ bit of the second vector with a $b^{th}$ bit of the second vector, where b is a value of an $a^{th}$ bit of the first vector corresponding to each initial value, a value of a ranges from 0 to N-1, a is an integer, and an exchanged second vector corresponding to each initial value is the sequence corresponding to each initial value.

In a possible design, the processing module is further configured to determine a first sequence set based on the sequence corresponding to each initial value, where a maximum Hamming autocorrelation value of any sequence in the first sequence set is less than or equal to the preset threshold; the processing module is further configured to determine a second sequence set based on the first sequence set, where a maximum Hamming cross-correlation value between any two sequences in the second sequence set is less than or equal to the preset threshold; and if a quantity of sequences included in the second sequence set is greater than or equal to K, the processing module is further configured to generate the target initial value table based on an initial value corresponding to each sequence in the second sequence set; or if a quantity of sequences included in the second sequence set is less than K, the processing module is further configured to increase a value of the preset threshold.

In a possible design, an initial value of the preset threshold meets the following formula:

$$TH = floor(\frac{N}{M})$$ ,

where TH is the initial value of the preset threshold, and floor indicates rounding down.

In a possible design, a value of N is a fixed value.

In a possible design, the processing module is further configured to send a target message to the second device, where the target message indicates the value of N, and/or a value of M, and/or a value of K.

In a possible design, the identifier of the communication apparatus is an index of a narrowband channel corresponding to the target message.

In a possible design, the processing module is further configured to determine a first index and a block list; and the processing module is further configured to determine, based on the first index and the block list, a target channel corresponding to a first time unit. The block list includes an index of an unavailable channel in a target frequency band, and the target frequency band is a frequency band supported by the first device. The target channel corresponding to the first time unit and the target signal are located in a same ranging round.

When the communication apparatus is configured to implement the method according to the second aspect and any one of the designs of the second aspect,
the processing module is configured to determine a first index and a block list; and the processing module is further configured to determine, based on the first index and the block list, a target channel corresponding to a first time unit. The block list includes an index of an unavailable channel in a target frequency band, and the target frequency band is a frequency band supported by the first device.

In a possible design, the processing module is further configured to determine a target channel corresponding to a second time unit, where the target channel corresponding to the second time unit is used to send a second radio frame to the second device.

In a possible design, the processing module is further configured to determine a target channel corresponding to a third time unit, where the target channel corresponding to the third time unit is used to receive a third radio frame from the second device.

In a possible design, at least two of the target channel corresponding to the first time unit, the target channel corresponding to the second time unit, and the target channel corresponding to the third time unit are different; and/or at least two of the first time unit, the second time unit, and the third time unit are located in a same ranging round.

In a possible design, that the processing module is configured to determine a first index includes: The processing module is configured to determine a first initial value of a linear feedback shift register LFSR; and the processing module is further configured to determine the first index based on the first initial value and the LFSR.

In a possible design, the first initial value is determined by at least one of the following: a media access control MAC address of the processing module, a clock of the processing module, a MAC address of the second device, a clock of the second device, an index of the first time unit, an index of a ranging round in which the first time unit is located, or an index of a ranging block in which the first time unit is located.

In a possible design, that the processing module is configured to determine, based on the first index and the block list, a target channel corresponding to a first time unit includes: If the block list does not include the first index, the processing module is configured to determine the first index as an index of the target channel corresponding to the first time unit; or if the block list includes the first index, the processing module is configured to determine, based on a second index and the block list, the index of the target channel corresponding to the first time unit, where the second index is determined based on a second initial value.

In a possible design, the second initial value is determined based on the first initial value, and/or the second initial value is greater than the first initial value.

In a possible design, the processing module is configured to determine a first index includes: The processing module is configured to determine the first index according to an advanced encryption standard AES algorithm.

In a possible design, that the processing module is configured to determine, based on the first index and the block list, a target channel corresponding to a first time unit includes: If the block list does not include the first index, the processing module is configured to determine the first index as an index of the target channel corresponding to the first time unit; or if the block list includes the first index, the processing module is configured to determine, based on a second index and the block list, the index of the target channel corresponding to the first time unit, where the second index is determined according to the AES algorithm.

According to a fourth aspect, this application provides a communication apparatus, including a processor and a memory. The memory is configured to store computer instructions, and when the processor executes the instructions, the communication apparatus is enabled to perform the method according to any one of the designs of the first aspect. The communication apparatus may be the first device according to the first aspect, or an apparatus included in the second device or the second aspect, for example, a chip.

According to a fifth aspect, this application provides a communication apparatus, including a processor and a communication interface. The communication interface is configured to communicate with a module outside the communication apparatus. The processor is configured to execute a computer program or instructions, to enable the communication apparatus to perform the method according to the first aspect and any one of the designs of the first aspect. The communication apparatus may be the first device according to the first aspect or the second aspect, or an apparatus included in the first device, for example, a chip.

According to a sixth aspect, this application provides a communication apparatus, including an interface circuit and a processor. The interface circuit is code/data read and write interface circuits, and the interface circuit is configured to receive computer-executable instructions (where the computer-executable instructions are stored in a memory, may be directly read from the memory, or may be read via another component) and transmit the computer-executable instructions to the processor. The processor is configured to execute the computer-executable instructions, to enable the communication apparatus to perform the method according to the first aspect and any one of the designs of the first aspect. The communication apparatus may be the first device according to the first aspect or the second aspect, or an apparatus included in the first device, for example, a chip.

According to a seventh aspect, this application provides a communication apparatus, including at least one processor. The processor is configured to execute a computer program or instructions, to enable the communication apparatus to perform the method according to the first aspect and any one of the designs of the first aspect. The communication apparatus may be the first device according to the first aspect or the second aspect, or an apparatus included in the first device, for example, a chip.

In some possible designs, the communication apparatus includes a memory, and the memory is configured to store necessary program instructions and data. The memory may be coupled to the processor, or may be independent of the processor.

In some possible designs, the communication apparatus may be a chip or a chip system. When the apparatus is the chip system, the apparatus may include a chip, or may include a chip and another discrete component.

According to an eighth aspect, this application provides a computer-readable storage medium, including a computer program or instructions. When the computer program or the instructions are run on a communication apparatus, the communication apparatus is enabled to perform the method according to the first aspect and any one of the designs of the first aspect, or the communication apparatus is enabled to perform the method according to the second aspect and any one of the designs of the second aspect.

According to a ninth aspect, this application provides a computer program product. The computer program product includes a computer program or instructions, and when the computer program or the instructions are run on a computer, the computer is enabled to perform the method according to the first aspect and any one of the designs of the first aspect, or the computer is enabled to perform the method according to the second aspect and any one of the designs of the second aspect.

According to a tenth aspect, this application further provides a communication system. The communication system includes the communication apparatus according to the third aspect and any one of the designs of the third aspect and the second device according to the third aspect and any one of the designs of the third aspect.

It should be noted that, for technical effect brought by any design of the third aspect to the tenth aspect, refer to the technical effect brought by a corresponding design of the first aspect or the second aspect. Details are not described herein again.

**BRIEF DESCRIPTION OF DRAWINGS**

FIG. 1 is a schematic flowchart of a basic ranging principle according to an embodiment of this application;
FIG. 2 is a diagram of a time sequence of fragment-based ranging preamble transmission according to an embodiment of this application;
FIG. 3 is a diagram of mutual interference between fragments of different ranging links according to an embodiment of this application;
FIG. 4 is a diagram of an architecture of a communication system according to an embodiment of this application;
FIG. 5 is a schematic flowchart of a communication method according to an embodiment of this application;

FIG. 6 is a diagram of a time sequence of fragment transmission according to an embodiment of this application;

FIG. 7 is a diagram of another time sequence of fragment transmission according to an embodiment of this application;

FIG. 8 is a diagram of still another time sequence of fragment transmission according to an embodiment of this application;

FIG. 9 is a block diagram of a structure of determining a time unit for transmitting each fragment according to an embodiment of this application;

FIG. 10 is a schematic flowchart of another communication method according to an embodiment of this application;

FIG. 11 is a schematic flowchart of still another communication method according to an embodiment of this application;

FIG. 12 is a schematic flowchart of yet another communication method according to an embodiment of this application;

FIG. 13 is a diagram of a structure of a communication apparatus according to an embodiment of this application;

FIG. 14 is a diagram of a structure of another communication apparatus according to an embodiment of this application;

FIG. 15 is a schematic flowchart of a communication method according to an embodiment of this application;

FIG. 16 is a schematic flowchart of generating an index according to an embodiment of this application;

FIG. 17 is a schematic flowchart of a target channel determining method according to an embodiment of this application;

FIG. 18 is another schematic flowchart of generating an index according to an embodiment of this application;

FIG. 19 is a diagram 1 of time-frequency resource allocation in a ranging process according to an embodiment of this application;

FIG. 20 is a diagram 2 of time-frequency resource allocation in a ranging process according to an embodiment of this application;

FIG. 21 is a diagram 3 of time-frequency resource allocation in a ranging process according to an embodiment of this application;

FIG. 22 is a diagram 4 of time-frequency resource allocation in a ranging process according to an embodiment of this application; and

FIG. 23 is a diagram 5 of time-frequency resource allocation in a ranging process according to an embodiment of this application.

## DESCRIPTION OF EMBODIMENTS

The following describes technical solutions in embodiments in this application in detail with reference to accompanying drawings.

In descriptions of this application, unless otherwise specified, a character "/" indicates an "or" relationship between associated objects. For example, A/B may indicate A or B. In this application, a term "and/or" describes only an association relationship between the associated objects and indicates that three relationships may exist. For example, A and/or B may indicate three cases: Only A exists, both A and B exist, and only B exists, where A and B may be singular or plural.

In addition, in the descriptions of this application, unless otherwise specified, "a plurality of" means two or more than two. At least one of the following items (pieces) or a similar expression thereof refers to any combination of these items, including any combination of singular items (pieces) or plural items (pieces). For example, at least one (piece) of a, b, or c may indicate: a, b, c, a and b, a and c, b and c, or a and b and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, words such as "example" or "for example" are used to indicate giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that features, structures, or characteristics in this application may be combined in one or more embodiments in any proper manner. It may be understood, in embodiments of this application, sequence numbers of processes do not mean execution sequences. The execution sequences of the processes should be determined based on functions and internal logic of the processes, and should not constitute any limitation on implementation processes of embodiments of this application.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with another feature based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment. The following implementations of this application are not intended to limit the protection scope of this application.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may learn that with evolution of the network architecture and emergence of new service scenarios, the technical solutions provided in embodiments of this application are also applicable to similar technical problems.

For ease of understanding, the following first describes technical terms and related concepts in embodiments of this application.

1. Ranging of a UWB system

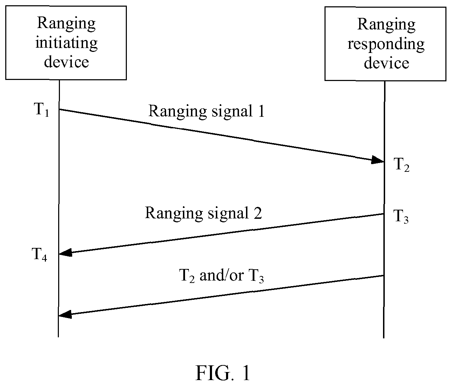

As shown in FIG. 1, a UWB ranging system includes at least one ranging initiating device and at least one ranging responding device, and a communication link between the ranging initiating device and the ranging responding device may be referred to as a ranging link. The ranging initiating device sends a ranging signal 1 at a moment $T_1$. The ranging responding device may estimate time of arrival (time of arrival, TOA) (denoted as a moment $T_2$) based on the ranging signal 1. In addition, the ranging responding device sends a ranging signal 2 to the ranging initiating device at a moment $T_3$, and the ranging initiating device estimates TOA (denoted as a moment $T_4$) based on the ranging signal 2. After the ranging signal 2 is sent, the ranging responding device sends a data frame to the ranging initiating device, where the data frame may carry $T_2$ and/or $T_3$. Finally, a distance between the ranging initiating device and the ranging responding device estimated by the ranging initiating device is:

$$d = \frac{\left(T_2 - T_1\right) + \left(T_4 - T_3\right)}{2} c \quad \text{Formula (1)}$$

In Formula (1), d indicates the distance between the ranging initiating device and the ranging responding device. $c$ indicates a propagation speed of a radio signal in the air medium, and usually, a value is a speed of light.

In a possible implementation, the ranging signal is usually generated based on a ranging preamble (ranging preamble). In this application, the ranging preamble may also be referred to as a ranging sequence, and the ranging preamble and the ranging sequence may be replaced with each other. This is not specifically limited in this application.

It may be understood that the ranging signal 1 may be a fragment in a ranging preamble sent by the ranging initiating device, and the ranging signal 2 may be a fragment in a ranging preamble sent by the ranging responding device.

It should be noted that the procedure shown in FIG. 1 is merely a basic ranging principle. In actual application, various variations may be performed based on the procedure shown in FIG. 1 to implement ranging, or another ranging algorithm may be used. This is not specifically limited in this application.

2. Frequency hopping spread spectrum (frequency hopping spread spectrum, FHSS) technology

The frequency hopping spread spectrum technology is a technology in which a transmitter and a receiver transmit signals by using a carrier frequency that changes according to a preset rule. Optionally, the carrier frequency may be controlled by a code sequence to randomly hop.

3. Time hopping (time hopping, TH)

The time hopping is a technology that divides a time axis into a plurality of time units and controls transmission of signals between the transmitter and the receiver in different time units. Optionally, the time unit of the time hopping may be controlled by a code sequence to randomly hop.

4. Fragment transmission technology of a UWB system

To prevent the UWB system from interfering with another system, radiation energy of a ranging signal needs to be limited to 37 nanojoules (nJ) in a test period (1 ms). To meet this regulation and increase a link budget, that is, increase a ranging range, the UWB fragment transmission technology is usually used to divide the ranging preamble into N fragments (fragment) for transmission, where N is a positive integer, and a time interval between adjacent fragments may be 1 ms. Based on this, in the transmission period of 1 ms, only a part of the ranging preamble is transmitted. Compared with a solution in which the entire ranging preamble is transmitted, because of short transmission time, transmit power can be increased while the energy 37 nJ of 1 ms is ensured, thereby increasing the ranging range.

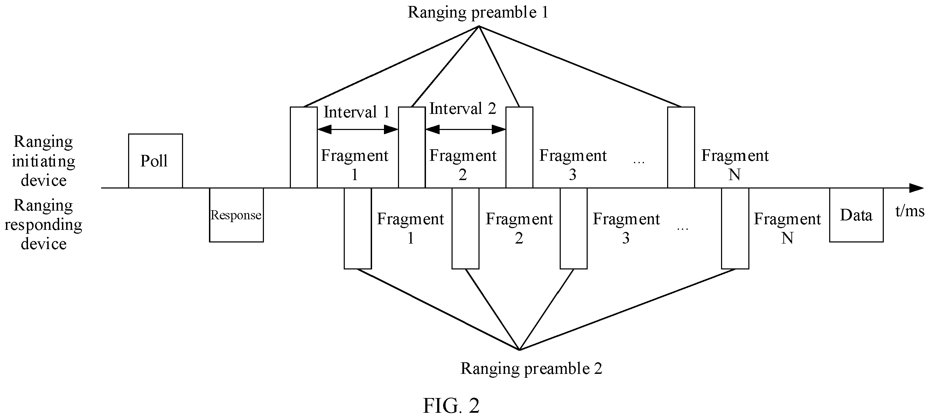

For example, FIG. 2 shows a basic procedure of UWB fragment transmission. First, the ranging initiating device may send a poll (poll) frame or another configuration frame. The poll frame is used as an example. The poll frame may be used to configure a quantity N of fragments and duration corresponding to each fragment. Optionally, a time interval between a first fragment (for example, a fragment 1 of the ranging initiating device) of a ranging signal and the poll frame may be preset, or may be configured by the poll frame. After receiving the poll frame, the ranging responding device may return a poll response (poll response) frame to the ranging initiating device. For example, it may be understood that, in different ranging processes, values of N configured by the poll frame for the different ranging processes may be the same or may be different. For different ranging links, values of N configured for the ranging links may be the same or different. For a same ranging link, values of N configured for the ranging initiating device and the ranging responding device may be the same.

Then, the ranging initiating device sends the fragments of a ranging preamble 1 to the ranging responding device. Correspondingly, after receiving the poll frame, the ranging responding device may divide a ranging preamble 2 into N fragments based on a configuration of the poll frame, and send the fragments of the ranging preamble 2 based on related time intervals (for example, time intervals between adjacent fragments). For example, the ranging preamble 1 and the ranging preamble 2 may be the same or may be different.

In a possible implementation, an $n^{th}$ fragment of the ranging preamble 1 and an $n^{th}$ fragment of the ranging preamble 2 are matched and sent in pairs, that is, a next pair of fragments are sent after a previous pair of fragments are sent. For example, a second fragment of the ranging preamble 1 is sent after a first fragment of the ranging preamble 2, a third fragment of the ranging preamble 1 is sent after a second fragment of the ranging preamble 2, and the same rule applies to the rest.

In a possible implementation, time intervals between different adjacent fragments of the ranging preamble may be preset or configured by the poll frame or another frame.

In a possible implementation, random time intervals may be used between the different adjacent fragments of the ranging preamble, or the time intervals between the different adjacent fragments of the ranging preamble may be the same or different. For example, as shown in FIG. 2, lengths of an interval 1 and an interval 2 may be the same or different.

An interval between fragments of the ranging preamble 2 may be equal to a time interval between corresponding fragments of the ranging preamble 1. For example, if the time interval between the fragment 1 and the fragment 2 of the ranging preamble 1 is the interval 1, the time interval between the fragment 1 and the fragment 2 of the ranging preamble 2 may also be the interval 1.

After fragment transmission of the ranging preamble 1 and the ranging preamble 2 is completed, the ranging responding device may send a data (data) frame to indicate, to the ranging initiating device, a timestamp related to the fragment of the ranging preamble 1 estimated by the ranging responding device, so that the ranging initiating device estimates a distance between the ranging initiating device and the ranging responding device.

In some possible implementations, the fragment transmission in the UWB system may be assisted by a narrowband, that is, one or more of the poll frame, the poll response frame, the data frame, and the like may be transmitted by using a frequency band of the narrowband. However, because the frequency band of the narrowband may coexist with a frequency band of another system (for example, a Wi-Fi system), to avoid interference between the UWB system and the another system, or avoid deep fading of a communication link, the poll frame, the poll response frame, the data frame, and the like may be transmitted in a frequency hopping manner, that is, different narrowband channels may be used for transmission.

5. Maximum Hamming autocorrelation and maximum Hamming cross-correlation

In a time hopping technology, a user may transmit a signal in a corresponding time unit based on a time hopping sequence. However, in a multi-user system, signals of two or more users may overlap in time domain, causing interference (or referred to as that a collision occurs). Therefore, to reduce a probability of mutual interference between the users, a Hamming cross-correlation value and a Hamming autocorrelation value of the time hopping sequence used by the user should be minimized.

For any two time hopping sequences X and Y whose lengths are N, the time hopping sequence X may be

indicated as $X = \{\mathrm{x}_i\}_{i=0}^{N-1}$, the time hopping sequence Y may be indicated as $Y = \{y_i\}_{i=0}^{N-1}$, and i is an integer from 0 to N-1. A periodic Hamming correlation function of the time hopping sequence X and the time hopping sequence Y when a

relative delay is $\tau$ is defined as: $H_{X,Y}(\tau) = \sum_{i=0}^{N-\tau-1} h[\mathrm{x}_i, \mathrm{y}_{i+\tau}]$, where $\tau$ is an integer and $0 \leq \tau < N - 1$. If $a = b$ (that is, $X_i = Y_{i+\tau}$), $h[a, b] = 1$ (that is, $h[\mathrm{x}_i, \mathrm{y}_{i+\tau}]=1$), and if $a \neq b$ (that is, $X_i \neq Y_{i+\tau}$), $h[a, b] = 0$ (that is, $h[\mathrm{x}_i, \mathrm{y}_{i+\tau}]=0$).

For the time hopping sequence X, a Hamming autocorrelation function of the time hopping sequence X may be defined as $H_{X,X}(\tau) = \sum_{i=0}^{N-\tau-1} h[\mathrm{x}_i, \mathrm{x}_{i+\tau}]$. Similarly, for the time hopping sequence Y, a Hamming autocorrelation function of the time hopping sequence Y may be defined as $H_{Y,Y}(\tau) = \sum_{i=0}^{N-\tau-1} h[y_i, y_{i+\tau}]$.

For the time hopping sequence X, a maximum Hamming autocorrelation function of the time hopping sequence X may be defined as $H(X) = \max_{1 \leq \tau < N-1} \{H_{X,X}(\tau)\}$. Similarly, for the time hopping sequence Y, a maximum Hamming autocorrelation function of the time hopping sequence Y may be defined as $H(Y) = \max_{1 \leq \tau < N-1} \{H_{Y,Y}(\tau)\}$.

For the time hopping sequence X and the time hopping sequence Y, a maximum Hamming cross-correlation function of the time hopping sequence X and the time hopping sequence Y may be defined as $H(X,Y) = \max_{1 \leq \tau < N-1} \{H_{X,Y}(\tau)\}$.

### 6. Linear feedback shift register (linear feedback shift register, LFSR)

In a shift register (shift register, SR), several registers are arranged in a row, and each register may store a binary number (for example, 0 or 1). The shift register may output a number at a rightmost end (or referred to as an end) each time, and then move the entire number to the right by one bit. In this case, one bit is left empty at a left end of the shift register. In this case, the shift register may perform an operation based on some existing binary sequences in the shift register by using a feedback function, and fill the left end of the shift register with a result obtained through the operation, so that the shift register can continuously output binary numbers. If the feedback function is a linear function, the shift register is referred to as the LFSR. The feedback function of LSFR may perform exclusive OR on some bits in the shift register, and fill a result obtained through the exclusive OR to the left end of the shift register.

Each bit in the LFSR may or may not participate in the exclusive OR, and the bit participating in the exclusive OR is referred to as a tap. A polynomial formed by a tap sequence plus 1 is referred to as a characteristic polynomial (or referred to as a feedback polynomial, or referred to as a generator polynomial) of the LFSR.

There are a plurality of characteristic polynomials of the LFSR, characteristic polynomials corresponding to different orders are different, and a same order may also correspond to one or more different characteristic polynomials. For example, if the order is 9, the characteristic polynomial may be $x^9 + x^5 + 1$. If the order is 15, the characteristic polynomial may be $x^{15} + x + 1$.

After an initial value of the LFSR and the characteristic polynomial are determined, a binary random sequence may be generated by using the LFSR. It may be understood that the initial value of the LFSR is a value initially stored in the LFSR, that is, a value before any shift operation is performed on the LFSR.

The foregoing describes the technical terms and the related concepts in embodiments of this application. Details are not described below again.

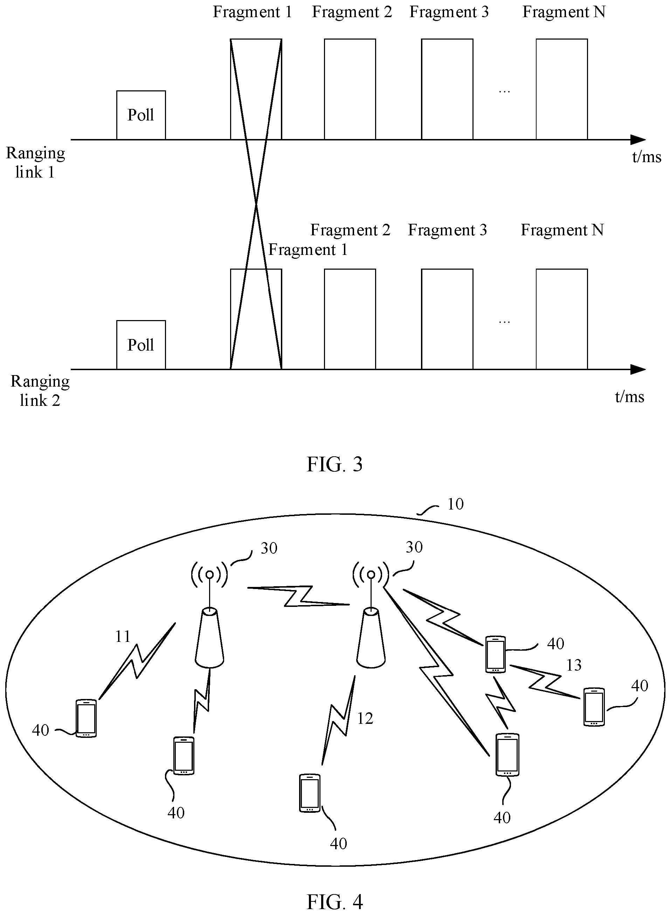

Currently, when ranging links of a plurality of users perform ranging at the same time in the UWB system, the plurality of users may interfere with each other (or referred to as that a collision occurs). For example, poll frames, poll response frames, and data frames of ranging links of two users may overlap in time domain and frequency domain. In this case, the poll frames, the poll response frames, and the data frames of the ranging links of the two users interfere with each other. To resolve this problem, frequency hopping may be performed on the poll frames, the poll response frames, and the data frames of the ranging links to avoid mutual interference. However, because frequency bands for sending ranging signals are fixed, that is, channels for sending the ranging signals are the same, ranging signals of different ranging links may overlap in the time domain, thereby causing the mutual interference. As shown in FIG. 3, a first fragment (for example, a fragment 1) of a ranging link 1 and a first fragment (for example, a fragment 1) of a ranging link 2 overlap in the time domain. Therefore, mutual interference is generated between the first fragment of the ranging link 1 and the first fragment of the ranging link 2. In addition, when fragments are sent at an equal interval (for example, 1 ms), if first fragments of two ranging links overlap in the time domain, subsequent fragments (for example, from fragments 2 to N) overlap in the time domain, thereby generating continuous interference.

Based on this, this application provides a communication method, to reduce a probability of mutual interference between a plurality of users in a UWB system. The technical solutions provided in embodiments of this application may be applied to various communication systems. The technical solutions in embodiments of this application may be applied to various communication systems, for example, a UWB system, a wireless local area network (wireless local area network, WLAN) system, a Bluetooth (Bluetooth) system, a ZigBee (ZigBee) system, a cellular mobile network system, a vehicle to everything (vehicle to everything, V2X) system, a device-to-device (device-to-device, D2D) communication system, a machine-to-machine (machine-to-machine, M2M) communication system, an internet of things (Internet of Things, IoT) system, or another applicable communication system. This is not limited in this application.

The communication systems applicable to this application are merely examples for description, and the communication systems applicable to this application are not limited thereto. This is described herein once for all, and details are not described below again.

FIG. 4 shows a communication system 10 according to an embodiment of this application. The communication system 10 includes at least one network device 30 and one or more terminal devices 40 connected to the network device 30. Optionally, communication may be performed between different network devices 30, between different terminal devices 40, and between the network device 30 and the network device 40.

Optionally, the communication system shown in FIG. 4 may use various types of network topology structures, for example, a star topology structure and a point-to-point topology structure. This application is not limited thereto. Optionally, the communication system shown in FIG. 4 may be applied to various scenarios such as synchronization, ranging, and sensing. This is not limited in this application.

Optionally, the network device 30 in this embodiment of this application is a device that enables the terminal device 40 to access a wireless network. The network device 30 may be a node in a radio access network, and may be referred to as a base station, or may be referred to as a radio access network (radio access network, RAN) node (or device). For example, the network device may include an evolved NodeB (NodeB, eNB, or e-NodeB, evolved NodeB) in a long term evolution (long term evolution, LTE) system or an LTE-advanced (LTE-Advanced, LTE-A) system, for example, a conventional macro base station eNB and a micro base station eNB in a heterogeneous network scenario; or may include a next-generation NodeB (next-generation NodeB, gNB) in a 5G new radio (new radio, NR) system; or may include a transmission reception point (transmission reception point, TRP), a home base station (for example, a home evolved NodeB, or a home NodeB, HNB), a base band unit (base band unit, BBU), a baseband pool BBU pool, a Wi-Fi access point (access point, AP), or the like; or may further include a central unit (central unit, CU) and a distributed unit (distributed unit, DU) in a cloud access network (cloud radio access network, CloudRAN) system; or may include a base station in a non-terrestrial network (non-terrestrial network, NTN), where the base station may be deployed on a high-altitude platform or a satellite, and in the NTN, the network device may be used as a layer 1 (L1) relay (relay), or may be used as a base station, or may be used as a DU, or may be used as an integrated access and backhaul (integrated access and backhaul, IAB) node. Alternatively, the network device may be a device that implements a base station function in IoT, for example, a device that implements the base station function in vehicle to everything (vehicle to everything, V2X), device-to-device (device-to-device, D2D), or machine-to-machine (machine-to-machine, M2M). This is not limited in this embodiment of this application.

Optionally, the terminal device 40 in this embodiment of this application may be a device configured to implement a wireless communication function, for example, a terminal device or a chip that may be used in the terminal device. The terminal device may be user equipment (user equipment, UE), an access terminal, a terminal unit, a terminal station, a mobile station, a remote station, a remote terminal, a mobile device, a wireless communication device, a UWB tag, a terminal agent, a terminal apparatus, or the like in a 5G network or a future evolved PLMN. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device, an unmanned aerial vehicle, a robot, or a computing device having a wireless communication function, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal device may be a terminal having a communication function in IoT, for example, a terminal in V2X (for example, a vehicle to everything device), a terminal in D2D communication, or a terminal in M2M communication. The terminal may be mobile or fixed.

Optionally, the network device 30 and the terminal device 40 in this embodiment of this application may also be referred to as communication apparatuses, and each may be a general-purpose device or a dedicated device. This is not specifically limited in this embodiment of this application.

Optionally, that the communication system shown in FIG. 4 is used in a ranging scenario is used as an example. In this embodiment of this application, a ranging initiating device may be a network device or a terminal device, and a ranging responding device may be a network device or a terminal device. The ranging initiating device and the ranging responding device may be devices of a same type, for example, both are network devices, or may be devices of different types. For example, the ranging initiating device is a network device, and the ranging responding device is a terminal device. The communication system 10 shown in FIG. 4 may also include a plurality of ranging links (FIG. 4 shows only three ranging links), for example, a ranging link 11, a ranging link 12, and a ranging link 13. In an embodiment, each ranging link may include one ranging initiating device and at least one ranging responding device, and different ranging links may work on a same frequency band, that is, on a same UWB channel. The technical solutions provided in embodiments of this application may be applicable to mutual interference between different ranging links.

It should be noted that the communication method provided in embodiments of this application may be applicable to both the ranging initiating device and the ranging responding device. To be specific, a first device may be the ranging initiating device, and a second device may be the ranging responding device, or the first device may be the ranging responding device, the second device may be the ranging initiating device. Alternatively, the communication method provided in embodiments of this application may be performed by a dedicated device other than the ranging initiating device and the ranging responding device. This application is not limited thereto. For a specific implementation, refer to the following method embodiments. Details are not described herein.

It should be noted that, the solutions in embodiments of this application may be further applied to another communication system, and a corresponding name may also be replaced with a name of a corresponding function in the another communication system.

It should be understood that FIG. 4 is merely a simplified diagram of an example for ease of understanding. The communication system may further include another device that is not drawn in FIG. 4.

With reference to the accompanying drawings, the following describes in detail the communication method provided in embodiments of this application by using an example in which any two devices shown in FIG. 4 interact with each other.

It should be noted that names of messages, names of parameters in the messages, or the like in the following embodiments of this application are merely examples, and there may be other names in a specific implementation. This is not specifically limited in embodiments of this application.

It may be understood that, in embodiments of this application, the first device and/or the second device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

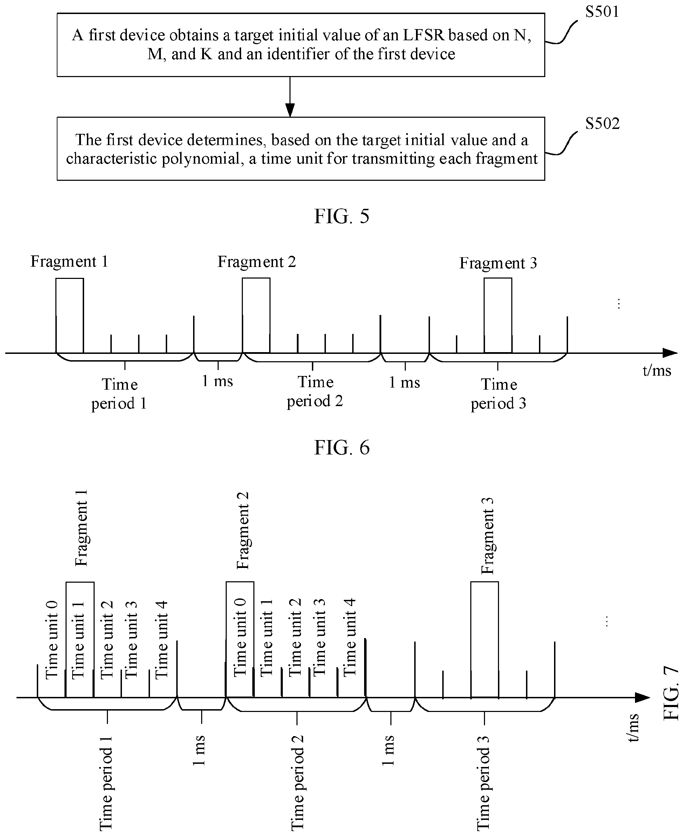

FIG. 5 is a communication method according to an embodiment of this application. The method includes the following steps.

S501: A first device obtains a target initial value of an LFSR based on N, M, and K and an identifier of the first device.

N is a quantity of fragments included in a target signal sent by the first device to a second device, and N is a positive integer.

It may be understood that a type and a function of the target signal may be different in different scenarios. For example, in a ranging scenario, the target signal may be a ranging preamble. In a sensing scenario, the target signal may be a sensing signal. The target signal is not specifically limited in this application.

Optionally, the ranging scenario is used as an example. For different ranging links, values of N may be the same or may be different. For a same ranging link, a value of N used by the first device is the same as a value of N used by the second device. For another scenario, N is similar to this.

M is a quantity of time units included in a time period in which each fragment is transmitted, and M is a positive integer. In this embodiment of this application, each fragment of the target signal corresponds to a time period, and a time interval between any two adjacent time periods may be a preset interval (for example, 1 ms). The time period corresponding to each fragment includes M time units, and each fragment may be transmitted in a time unit in the corresponding time period (namely, the M time units). Optionally, duration of each time unit may be the same or may be different. This is not limited in this application. Optionally, the time unit may be a slot, or may be another time unit.

As shown in FIG. 6, that M is equal to 5, that is, each time period includes five time units is used as an example. A fragment 1 of the target signal is sent in a time unit in a time period 1, a fragment 2 is sent in a time unit in a time period 2, where an interval between the time period 1 and the time period 2 is 1 ms, a fragment 3 is sent in a time unit in a corresponding time period 3, where an interval between the time period 2 and the time period 3 is 1 ms, and the same rule applies to the rest.

It may be understood that, in this embodiment of this application, duration of a time unit may be greater than duration of a fragment.

In some possible implementations, if a fragment is transmitted at an $m^{th}$ of corresponding M time units, where m is a positive integer, and m is less than or equal to M, a next fragment is transmitted after at least $M - m$ time units and time of a preset interval. It may be understood that the preset interval is a time interval (for example, 1 ms) between a time period corresponding to the fragment and a time period corresponding to the next fragment. As shown in FIG. 7, it is assumed that the fragment 1 is transmitted in a second time unit (namely, the time unit 1) in the time period 1, and the fragment 2 is transmitted after waiting for at least all the time units (namely, the time unit 2 to the time unit 4 corresponding to the time period 1) after the second time unit and 1 ms of time. When the fragment 2 is transmitted, the fragment 2 may be transmitted in one of the five time units included in the time period 2. It is assumed that the fragment 2 is transmitted in a first time unit (namely, the time unit 0) in the time period 2, and the fragment 3 is transmitted after waiting for at least all the time units (namely, the time unit 1 to the time unit 4 corresponding to the time period 2) after the first time unit and 1 ms of time. The same rule applies to the rest.

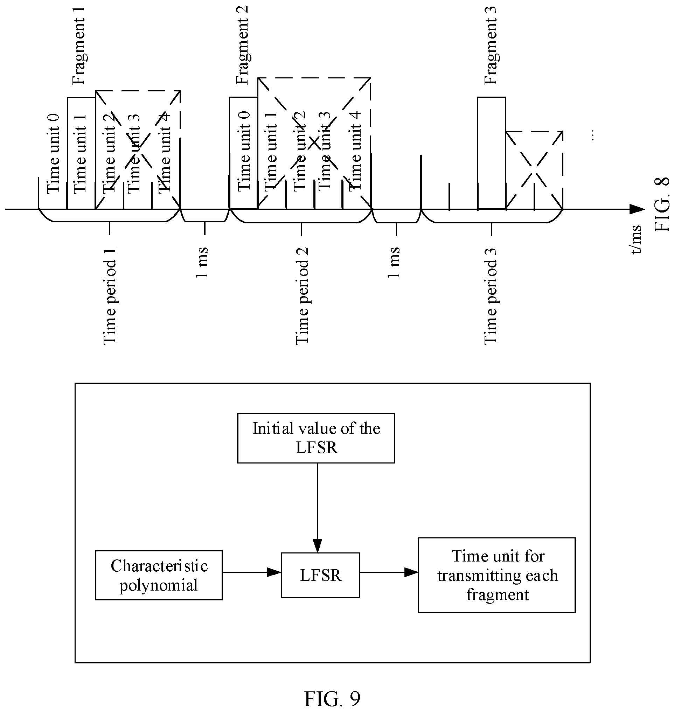

In another possible implementation, if a fragment is transmitted at an $m^{th}$ of corresponding M time units, where m is a positive integer, and m is less than or equal to M, a next fragment is transmitted after waiting for at least time of a preset interval, that is, there is no need to additionally wait for time of $M - m$ time units. It may be understood that the preset interval is a time interval (for example, 1 ms) between a time period corresponding to the fragment and a time period corresponding to the next fragment. As shown in FIG. 8, it is assumed that the fragment 1 is transmitted in the second time unit (namely, the time unit 1) in the time period 1, and the fragment 2 is transmitted after waiting for at least 1 ms of time, that is, there is no need to wait for all the time units (namely, the time unit 2 to the time unit 4 in the time period 1) after the second time unit in the time period 1 shown in FIG. 7. When the fragment 2 is transmitted, the fragment 2 may also be transmitted in one of the five time units included in the time period 2. It is assumed that the fragment 2 is transmitted in the first time unit (namely, the time unit 0) in the time period 2, and the fragment 3 is transmitted after waiting for at least 1 ms of time, that is, there is no need to wait for all the time units (namely, the time unit 1 to the time unit 4 in the time period 2) after the first time unit in the time period 2 shown in FIG. 7. The same rule applies to the rest.

Optionally, before step S501, the first device may send a target message to the second device, where the target message indicates the value of N, and/or a value of M, and/or a value of K. For example, when the first device is a ranging initiating device, the target message may be a poll frame. When the first device is a ranging responding device, the target message may be a poll response frame. It may be understood that values of N, M, K, and the like may be configured by the poll frame, or may be configured by the poll response frame. Optionally, the value of M may alternatively be specified in advance. This is not limited in this application.

In some possible implementations, the identifier of the first device may be an index of a narrowband channel corresponding to the target message. For example, when the target message is transmitted on the narrowband in a frequency hopping manner, indexes of narrowband channels corresponding to target messages of different first devices are different, that is, the indexes of the narrowband channels corresponding to the different first devices are different. Therefore, the first device may be identified by using the index of the narrowband channel. Optionally, the ranging scenario is used as an example. Indexes of narrowband channels corresponding to the first device and the second device in a same ranging link may be the same.

Certainly, the identifier of the first device may alternatively be another type of information. For example, when the target message is not transmitted on the frequency band of the narrowband, the identifier of the first device may be an index of another channel, or the identifier of the first device may be various information that can uniquely identify the first device, such as a media access control (media access control, MAC) address of the first device. This is not limited in this application.

K is a quantity of first devices or K is a quantity of second devices, and K is a positive integer. For example, the ranging scenario is used as an example. When one ranging initiating device corresponds to one ranging responding device, that is, one ranging link includes one ranging initiating device and one ranging responding device, K is not only a quantity of ranging initiating devices, but also a quantity of ranging responding devices. In this case, a system in which the first device is located includes K first devices and K second devices. In this case, the first device may be the ranging initiating device, or may be the ranging responding device. Therefore, K may be the quantity of first devices, or may be the quantity of second devices.

When one ranging initiating device corresponds to a plurality of ranging responding device, K is a quantity of ranging initiating devices. In this case, if the first device is the ranging initiating device, and the second device is the ranging responding device, K is the quantity of first devices. If the first device is the ranging responding device, and the second device is the ranging initiating device, K is the quantity of second devices.

S502: The first device determines, based on the target initial value and a characteristic polynomial, a time unit for transmitting each fragment.

An order of the characteristic polynomial is L, and L is a positive integer.

In a possible implementation, the characteristic polynomial may be determined based on the order of the characteristic polynomial. For example, if the order of the characteristic polynomial is 9, the characteristic polynomial may be $x^9 + x^5 + 1$. If the order of the characteristic polynomial is 15, the characteristic polynomial may be $x^{15} + x + 1$. It may be understood that the characteristic polynomial in the foregoing example is used in the existing protocol. Therefore, the characteristic polynomial used in the existing protocol is directly reused. In this way, a small change is made to the protocol. In addition, for a chip that uses the characteristic polynomial in the foregoing example, the method provided in this embodiment of this application may be directly used, and a manufacturer does not need to redesign a production chip. This is easy to implement and has low complexity.

In another possible implementation, the characteristic polynomial may alternatively be preset. It may be understood that a same order of the characteristic polynomial may correspond to one or more different characteristic polynomials, and a specific characteristic polynomial to be used may be determined by a developer based on an actual requirement.

The time unit for transmitting each fragment is one of M time units corresponding to the fragment.

Optionally, as shown in FIG. 9, the first device may determine, based on the target initial value and the characteristic polynomial by using the LFSR, the time unit for transmitting each fragment. It should be noted that the LFSR in this embodiment of this application is merely used as a possible implementation, and may be correspondingly replaced with another possible shift register (for example, a non-linear shift register). This is not limited in this application.

In a possible implementation, the first device may generate, based on the target initial value and the characteristic polynomial, a first quantity of binary random numbers corresponding to each fragment. Then, the first device converts the first quantity of binary random numbers corresponding to each fragment into a number with a target base, where the number with the target base corresponding to each fragment is used to determine the time unit for transmitting each fragment. For example, it is assumed that the value of M is 4, that is, one fragment corresponds to four time units. If a number with a target base corresponding to the fragment is 3, a third of the four time units corresponding to the fragment may be used as a time unit for or transmitting the fragment, or a time unit whose sequence number is 3 in the four time units corresponding to the fragment is used as a time unit for transmitting the fragment.

Optionally, the first quantity and a value of the number with the target base may be determined based on M. For example, the first quantity may be $\log_2 M$, and the number with the target base may be a base-m number. Alternatively, the first quantity may be greater than $\log_2 M$, and the number with the target base may be a base-m number. Optionally, when the first quantity is greater than $\log_2 M$, the first device may convert the first $\log_2 M$ binary random numbers into the base-m number. For example, the value of M is 4, and the value of N is 32. It is assumed that for a first fragment, two corresponding binary random numbers are 11, and a quaternary number converted from the binary random numbers is 3. In this case, a sequence number of a time unit corresponding to the fragment is 3, the time unit corresponding to the fragment is a third time unit, or when sequence numbers of the four time units are respectively 0, 1, 2, and 3, the sequence number of the time unit corresponding to the fragment is 2. It is assumed that for a second fragment, two corresponding binary random numbers are 10, and a quaternary number converted from the binary random numbers is 2. In this case, a sequence number of a time unit corresponding to the fragment is 2, the time unit corresponding to the fragment is a second time unit, or when the sequence numbers of the four time units are respectively 0, 1, 2, and 3, the sequence number of the time unit corresponding to the fragment is 1. The same rule applies to the rest. After the time unit for transmitting each fragment is determined, the corresponding fragment may be transmitted in the corresponding time unit.

It may be understood that, in this embodiment of this application, different time units correspond to different sequence numbers, and the sequence number may be used to identify the time unit. This is described herein once for all.

In another possible implementation, the first device may generate, based on the target initial value and the characteristic polynomial, a second quantity of binary random numbers corresponding to N fragments. Then, the first device determines, based on the second quantity of binary random numbers and sequence numbers of the M time units, the time unit for transmitting each fragment.

Optionally, a value of the second quantity may be determined based on N and L. For example, the value of the second quantity may be $N+L-1$. That the first device determines, based on the second quantity of binary random numbers and sequence numbers of the M time units, the time unit for transmitting each fragment specifically includes:

The first device generates a first vector based on the second quantity of binary random numbers, where the first vector includes N integers greater than or equal to 0 and less than or equal to N-1. For example, the first device may convert first to $L^{th}$ binary random numbers into a first integer whose value ranges from 0 to $2^L - 1$ (or referred to as greater than or equal to 1 and less than or equal to $2^L - 1$), and convert second to $2+L-1$ binary random numbers into a second integer whose value ranges from 0 to $2^L - 1$. The same rule applies to the rest, and $N^{th}$ to $N+L-1$ binary random numbers are converted into an $N^{th}$ integer whose value ranges from 0 to $2^L - 1$. Then, the N integers greater than or equal to 0 and less than or equal to N-1 may be obtained by performing a modulo operation on each of the N integers and N, and the N integers greater than or equal to 0 and less than or equal to N-1 may form the first vector.

For example, if a value of L is 9, the first device may convert first to ninth binary random numbers into a first integer whose value ranges from 0 to 511, and convert second to tenth binary random numbers into a second integer whose value ranges from 0 to 511. The same rule applies to the rest, and $N^{th}$ to $N+9-1$ binary random numbers are converted into an $N^{th}$ integer whose value ranges from 0 to 511. The N integers greater than or equal to 0 and less than or equal to N-1 may be obtained by performing a modulo operation on the N integers and N, and the N integers greater than or equal to 0 and less than or equal to N-1 is the first vector.

The first device generates a second vector based on the sequence numbers of the M time units, where the second vector includes N elements. In a possible example, the first device may arrange the sequence numbers of the M time units in ascending order to generate the second vector. For example, the value of N is 32, the value of M is 10, and the sequence numbers of the time units range from 0 to 9. In this case, the first vector may be [0,1,2,3,4,5,6,7,8,9,0,1,2,3,4,5,6,7,8,9,0,1,2,3,4,5,6,7,8,9,0,1], the vector includes 32 elements, and each element indicates a sequence number of a time unit. It may be understood that the sequence number of the time unit is merely an example for description, the time unit may alternatively use another sequence number, and the sequence numbers of the time unit may be consecutive or inconsecutive. This is not limited in this application.

Optionally, the first device may alternatively arrange the sequence numbers of the M time units in descending order to generate the second vector, or the first device may arrange the sequence numbers of the M time units in another manner to generate the second vector. This is not limited in this application either. It may be understood that different first devices may correspond to a same second vector, or may correspond to different second vectors. This is not limited in this application.

Optionally, a quantity of elements included in the first vector may be the same as a quantity of elements included in the second vector.

The first device may determine, based on the first vector and the second vector, the time unit for transmitting each fragment. Specifically, in a possible example, the first device may exchange an $a^{th}$ bit (or referred to as an $a^{th}$ element) of the second vector with a $b^{th}$ bit (or referred to as a $b^{th}$ element) of the second vector, where b is a value of an $a^{th}$ bit of the first vector, a value of a ranges from 0 to N-1, and a is an integer. For example, it is assumed that the value of M is 4, the value of N is 8, an index of the vector starts from 0, the second vector is [0,1,2,3,0,1,2,3], and the first vector is [3,7,6,1,0,2,4,5]. When a=0, a value of a $0^{th}$ bit of the first vector is 3. Therefore, a $0^{th}$ bit of the second vector and a 3rd bit of the second vector are exchanged, and an exchanged second vector is [3,1,2,0,0,1,2,3]. When a=1, a first bit of the first vector is 7. Therefore, a first bit of the second vector and a seventh bit of the second vector are exchanged, and the exchanged second vector is [3,3,2,0,0,1,2,1]. The same rule applies to the rest when a=2, a=3, and a=N-1, and n times of exchange are completed.

Alternatively, the first device may exchange an $a^{th}$ bit of the second vector with a $(b+1)^{th}$ bit of the second vector, where b is a value of an $a^{th}$ bit of the first vector, a value of a ranges from 1 to N, and a is an integer. For example, it is assumed that the value of M is 4, the value of N is 8, an index of the vector starts from 1, the second vector is [0,1,2,3,0,1,2,3], and the first vector is [3,7,6,1,0,2,4,5]. When a=1, a value of a first bit of the first vector is 3. Therefore, a first bit of the second vector and a fourth bit of the second vector are exchanged, and the exchanged second vector is [3,1,2,0,0,1,2,3]. When a=2, a second bit of the first vector is 7. Therefore, a second bit of the second vector and an eighth bit of the second vector are exchanged, and the exchanged second vector is [3,3,2,0,0,1,2,1]. The same rule applies to the rest when a=3, a=4, and a=N, and n times of exchange are completed.

The first device may determine, based on an element in the exchanged second vector, the time unit for transmitting each fragment. For example, the first device may use each element in the second vector as a sequence number of the time unit for transmitting each fragment. For example, it is assumed that the exchanged second vector is [5,3,9], and three elements (namely, "5", "3", and "9") included in the second vector are sequence numbers of time units for transmitting three fragments. For another example, the first device may use a time unit corresponding to each element in the second vector as the time unit for transmitting each fragment. In this example, the element is not necessarily the sequence number of the time unit. For example, the exchanged second vector is still [5,3,9]. In this case, the element "5" included in the second vector indicates that a time unit for transmitting a fragment is a fifth time unit in time units corresponding to the fragment, but a sequence number of the time unit is not necessarily 5, and the sequence number of the time unit may be 4 or another value. Meanings of the element "3" and the element "9" are similar to those of the time unit. Details are not described again.

Optionally, after the first device determines the time unit for transmitting each fragment, the first device may notify the second device of the time unit for transmitting each fragment. Subsequently, the first device and the second device may complete transmission of a pair of fragments in the time unit for transmitting each fragment. FIG. 2 is used as an example. It is assumed that the first device is the ranging initiating device, and the second device is the ranging responding device. If the ranging initiating device determines that the fragment 1 is transmitted in a time unit 1 in a time period 1, both the fragment 1 of the ranging initiating device and the fragment 1 of the ranging responding device are transmitted in the time unit 1 in the time period 1. It may be understood that the fragment 1 of the ranging initiating device and the fragment 1 of the ranging responding device may not be simultaneously transmitted, and may be transmitted at a time interval. However, both time for transmitting the fragment 1 of the ranging initiating device and time for transmitting the fragment 1 of the ranging responding device are located in the time unit 1.

It may be understood that time hopping performance depends on correlation between time hopping sequences of different users. For the different users, the time hopping sequences corresponding to the users may be different. A time hopping sequence corresponding to a user may be used to transmit all fragments of the user in corresponding time units. The correlation of the time hopping sequence is related to the initial value of the LFSR. Therefore, for each user, a preferred initial value of the LFSR may be obtained by using the foregoing technical solution, to determine an appropriate time unit for performing time hopping transmission on a fragment of the user. It can be ensured that the time hopping sequences of the different users are orthogonal as much as possible, and further, it can be ensured that a quantity of collisions between fragments of the users is minimized, and a probability of mutual interference between the plurality of users can be greatly reduced.

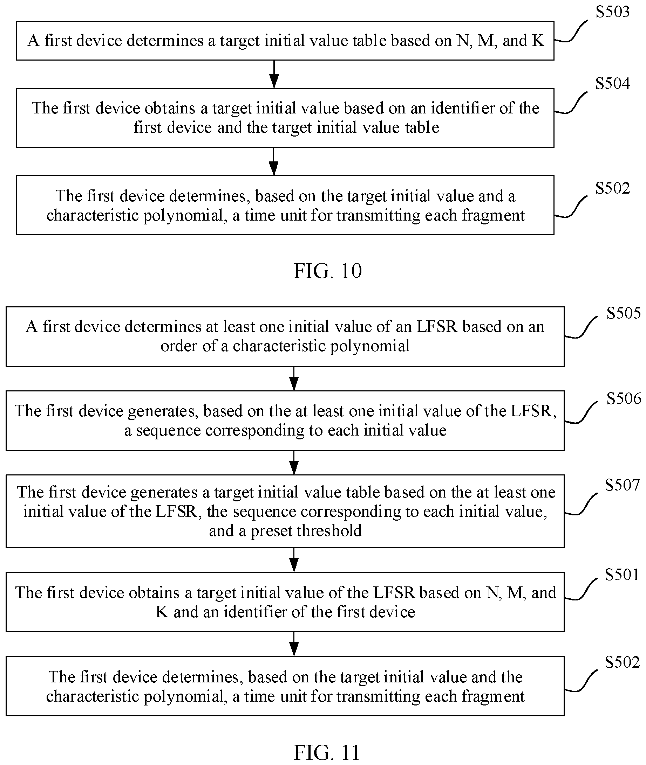

In a possible implementation, as shown in FIG. 10, step S501 shown in FIG. 5 may be further specifically implemented as the following step S503 and step S504.

S503: The first device determines a target initial value table based on N, M, and K.

The target initial value table includes at least two initial values. For example, the target initial value table may use various forms such as a set, a vector, and a sequence. One element included in the target initial value table indicates one initial value. A presentation form of the target initial value table is not limited in this application.

It may be understood that different N, M, and K correspond to different initial value tables. Therefore, the first device may first determine the target initial value table from a plurality of initial value tables based on N, M, and K.

Optionally, the different first devices may correspond to a same target initial value table, or may correspond to different target initial value tables. For example, when N and M corresponding to the different first devices are all the same, target initial value tables corresponding to the first devices are the same. When N and M corresponding to only some of the first devices are the same, or N and/or M corresponding to the different first devices are/is different, there may be a plurality of target initial value tables corresponding to the different first devices.

S504: The first device obtains the target initial value based on the identifier of the first device and the target initial value table.

Optionally, the first device may perform a modulo operation on the identifier of the first device and a size of the target initial value table, to obtain the target initial value. It may be understood that the size of the target initial value table may be a quantity of initial values included in the target initial value table. For example, the identifier of the first device is "2", and the target initial value table includes four initial values, that is, the size of the target initial value table is "4". A result obtained by the first device by performing the modulo operation on the identifier "2" of the first device and the size "4" of the target initial value table is 2. In this case, the first device may determine that the target initial value is a second initial value in the target initial value table. For example, if the second initial value in the target initial value table is "19", the first device determines that the target initial value is 19.

Optionally, the first device may alternatively directly select an initial value from the target initial value table as the target initial value based on the identifier of the first device. For example, if the identifier of the first device is "2", the first device may directly use a second initial value in the target initial value table as the target initial value. It is assumed that the second initial value in the target initial value table is "19", and the first device may directly use "19" as the target initial value.

Certainly, a value of the identifier of the first device does not necessarily need to be limited to 1 to the size of the target initial value table (including 1 and the size of the target initial value table). For example, the size of the target initial value table is "4". In this case, the value of the identifier of the first device is not necessarily limited to 1 to 4 (including 1 and 4), and the value of the identifier of the first device may also be beyond the range. For example, the identifier of the first device is "20", and the identifier of the first device is the MAC address. Optionally, the first device may first convert the identifier of the first device to a value from 1 to the size of the target initial value table, for example, to the value from 1 to 4, and then obtain the target initial value based on a converted identifier. The conversion rule is not limited in this application.

Optionally, the first device may alternatively directly select an initial value from the target initial value table as the target initial value based on the identifier of the first device that is not converted. This is not limited in this application.

It may be understood that identifiers of the different first devices may be consecutive or inconsecutive. This is not limited in this application either. The different first devices obtain different target initial values.

For descriptions of step S502 in FIG. 10, refer to the related descriptions of step S502 in FIG. 5.

Optionally, as shown in FIG. 11, before step S501 shown in FIG. 5, the method shown in FIG. 5 may further include the following step S505 to step S507.

S505: The first device determines at least one initial value of the LFSR based on the order of the characteristic polynomial.

It may be understood that, if the order of the characteristic polynomial is determined, a value range of the initial value of the LFSR may be determined. For example, if the order of the characteristic polynomial is L, the value range of the initial value of the LFSR is 0 to $2^L - 1$ (including 0 and $2^L - 1$). The first device may use all or some integers from 0 to $2^L - 1$ as the initial value of the LFSR.

S506: The first device generates, based on the at least one initial value of the LFSR, a sequence corresponding to each initial value.

In a possible implementation, the first device may generate, based on the at least one initial value of the LFSR and the characteristic polynomial, a third quantity of binary random numbers corresponding to each initial value; and the first device may convert the third quantity of binary random numbers corresponding to each initial value into a number with a target base corresponding to each initial value, and then generate, based on the number with the target base corresponding to each initial value, the sequence corresponding to each initial value.

Optionally, a value of the third quantity may be determined based on N and M, and a value of the number with the target base may be determined based on M. For example, the value of the third quantity may be $N*lo_2M$, the number with the target base may be the base-m number, and the sequence corresponding to each initial value includes N integers greater than or equal to 0 and less than or equal to M-1. For example, for $N*log_2M$ binary random numbers corresponding to each initial value, the first device may sequentially convert $((e-1)*log_2M)^{th}$ to $(e*log_2M)^{th}$ binary random numbers into the base-m number, where a value of e ranges from 1 to N, to obtain the N integers greater than or equal to 0 and less than or equal to M-1. A sequence including the N integers greater than or equal to 0 and less than or equal to M-1 is a sequence corresponding to the initial value.

In another possible implementation, the first device may generate, based on the at least one initial value of the LFSR and the characteristic polynomial, a second quantity of binary random numbers corresponding to each initial value; and the first device may generate, based on the second quantity of binary random numbers corresponding to each initial value and the sequence numbers of the M time units, the sequence corresponding to each initial value.

Optionally, a value of the second quantity may be determined based on N and L. For example, the value of the second quantity may be $N+L-1$. That the first device generates, based on the second quantity of binary random numbers corresponding to each initial value and the sequence numbers of the M time units, the sequence corresponding to each initial value specifically includes:

The first device generates, based on the second quantity of binary random numbers corresponding to each initial value, a first vector corresponding to each initial value, where the first vector corresponding to each initial value includes N integers greater than or equal to 0 and less than or equal to N-1. The first device generates a second vector based on the sequence numbers of the M time units, where the second vector includes N elements. The first device may generate, based on the first vector corresponding to each initial value and the second vector, the sequence corresponding to each initial value.

Optionally, the first device may exchange an $a^{th}$ bit of the second vector with a $b^{th}$ bit of the second vector, where b is a value of an $a^{th}$ bit of the first vector corresponding to each initial value, a value of a ranges from 0 to N-1, and a is an integer. Alternatively, the first device may exchange an $a^{th}$ bit of the second vector with a $(b+1)^{th}$ bit of the second vector, where b is a value of an $a^{th}$ bit of the first vector corresponding to each initial value, a value of a ranges from 1 to N, and a is an integer. An exchanged second vector corresponding to each initial value is the sequence corresponding to each initial value.

Optionally, in this implementation, a total quantity of generated sequences corresponding to the initial values may be $2^L$.

Herein, for detailed descriptions of the first vector and the second vector, refer to the foregoing descriptions.

S507: The first device generates the target initial value table based on the at least one initial value of the LFSR, the sequence corresponding to each initial value, and a preset threshold.

The preset threshold indicates a maximum quantity of collisions of fragments corresponding to any two target links, and the target link is a communication link corresponding to any one of the K first devices. For example, in the ranging scenario, the communication link corresponding to the first device may be the ranging link. In another scenario, the communication link corresponding to the first device may alternatively be a link implementing another function (for example, sensing).

It may be understood that fragments between the different first devices may collide, fragments between different second devices may collide, and fragments between the first device and the second device may collide. The ranging scenario is used as an example. It is assumed that a current ranging scenario includes a ranging link 1 and a ranging 2, the ranging link 1 includes one ranging initiating device 1 and one ranging responding device 1, and the ranging link 2 includes one ranging initiating device 2 and one ranging responding device 2. A fragment of the ranging initiating device 1 of the ranging link 1 may collide with a fragment of the ranging initiating device 2 of the ranging link 2, and the fragment of the ranging initiating device 1 of the ranging link 1 may also collide with a fragment of the ranging responding device 2 of the ranging link 2. The ranging responding device is similar to this. However, in either case, the two ranging links collide.

Optionally, an initial value of the preset threshold may meet the following formula: $$TH = floor(\frac{N}{M})$$ , where TH is the initial value of the preset threshold, and floor indicates rounding down. Certainly, the initial value of the preset threshold may alternatively be another value, and may be set by the developer based on an actual requirement. This is not limited in this application.

For related descriptions of other steps in FIG. 11, refer to the descriptions of corresponding steps in FIG. 5. Details are not described herein again.

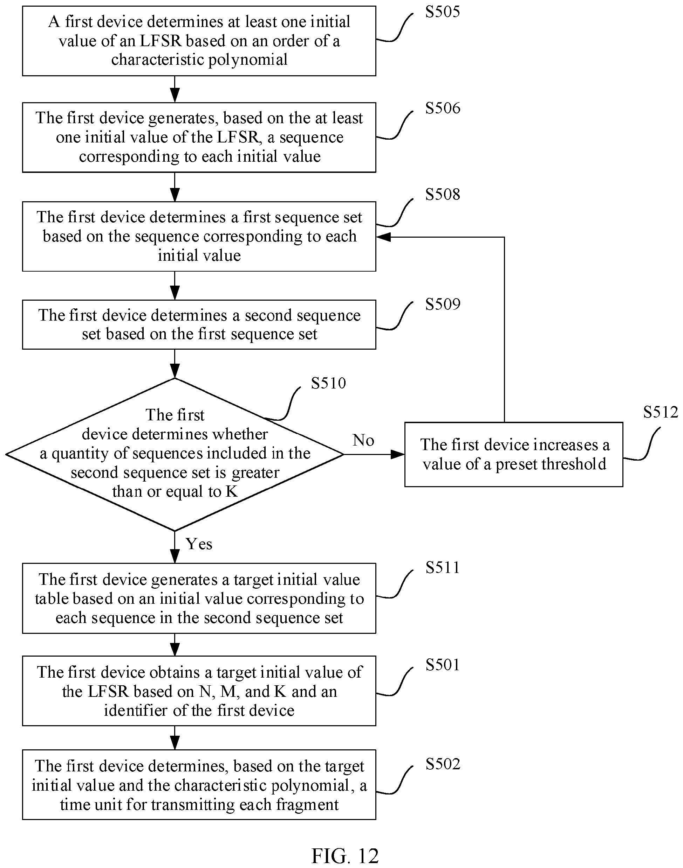

Optionally, as shown in FIG. 12, step S507 shown in FIG. 11 may be specifically implemented as the following step S508 to step S512.

S508: The first device determines a first sequence set based on the sequence corresponding to each initial value.

A maximum Hamming autocorrelation value of any sequence in the first sequence set is less than or equal to the preset threshold. For descriptions of the maximum Hamming autocorrelation, refer to the foregoing descriptions.

S509: The first device determines a second sequence set based on the first sequence set.

A maximum Hamming cross-correlation value between any two sequences in the second sequence set is less than or equal to the preset threshold. For descriptions of the maximum Hamming cross-correlation, refer to the foregoing descriptions.

S510: The first device determines whether a quantity of sequences included in the second sequence set is greater than or equal to K.

If the quantity of sequences included in the second sequence set is greater than or equal to K, step S511 is performed; or if the quantity of sequences included in the second sequence set is less than K, step S512 is performed.

Based on this step, because one initial value of the LFSR corresponds to one sequence, it is ensured that the quantity of sequences in the second sequence set is greater than or equal to K, and subsequently, it can be ensured at least that different users may each obtain a different initial value of the LFSR.

S511: The first device generates the target initial value table based on an initial value corresponding to each sequence in the second sequence set.

S512: The first device increases a value of the preset threshold.

For example, the first device may increase the value of the preset threshold by 1. After the first device increases the value of the preset threshold, the first device may return to perform step S508.

For related descriptions of other steps in FIG. 12, refer to the descriptions of corresponding steps in FIG. 11.

In this embodiment, complexity of determining the second sequence set from the sequence corresponding to each initial value is related to the value of the preset threshold. In addition, when the second sequence set is searched for from the sequence corresponding to each initial value, search space is very large. Based on the search method provided in this embodiment of this application, a sequence with good correlation can be quickly obtained.

For example, that the characteristic polynomial is $x^9 + x^5 + 1$ is used as an example. Table 1 shows an example of initial value tables corresponding to the different N, M, and K when the sequence corresponding to each initial value is generated in the first implementation described in step S506.

**Table 1**

| N | M | K | Initial value table | TH1 | TH2 |
|---|---|---|---|---|---|
| 32 | 4 | 2 | 5,10 | 8 | 13 |
| | | 4 | 7,14,19,26 | 11 | 17 |
| | | 8 | 5,6,9,14,18,22,26,27 | 12 | 25 |
| | | 16 | 1,11,12,14,15,19,20,21,23,24,25,28,37,39,44,47 | 13 | 30 |
| | 8 | 2 | 15,47 | 5 | 8 |
| | | 4 | 1,2,3,6 | 6 | 13 |
| | | 8 | 4,6,26,45,61,109,165,210 | 6 | 24 |
| | | 16 | 6,7,11,14,15,22,23,24,25,26,29,31,37,39,45,46 | 7 | 30 |
| | 16 | 2 | 1,123 | 2 | 5 |
| | | 4 | 1,2,3,4 | 3 | 12 |
| | | 8 | 1,3,4,6,7,8,10,12 | 3 | 24 |
| | | 16 | 1,2,3,4,5,6,8,10,12,15,21,25,30,31,42,61 | 4 | 30 |
| | 32 | 2 | 1,2 | 2 | 4 |
| | | 4 | 2,9,39,50 | 2 | 11 |
| | | 8 | 1,3,4,5,8,9,10,11 | 3 | 24 |
| | | 16 | 2,4,7,11,12,14,19,20,21,28,37,41,44,54,83,147 | 3 | 30 |

"TH1" in Table 1 indicates a maximum quantity of collisions of fragments corresponding to any two target links when time hopping transmission is performed on the fragments based on the initial value of the LFSR obtained by using the method provided in this embodiment of this application. "TH2" indicates a maximum quantity of collisions between any two target links when time hopping transmission is performed on the fragments based on an initial value of the LFSR that is randomly selected.

As shown in Table 1, when the value of N is 32, the value of M is 4, and the value of K is 2, the corresponding initial value table is {5, 10}, and the initial value table {5,10} includes two elements: which are "5" and "10" respectively. Each element indicates an initial value. For a meaning of the corresponding initial value table when N, M, and K are other values, refer to the foregoing example.

For example, that the characteristic polynomial is $x^{15} + x + 1$ is used as an example. Table 2 shows an example of initial value tables corresponding to the different N, M, and K when the sequence corresponding to each initial value is generated in the first implementation described in step S506.

**Table 2**

| N | M | K | Initial value table | TH1 | TH2 |
|---|---|---|---|---|---|
| 32 | 4 | 2 | 1159,5323 | 8 | 15 |
| | | 4 | 329,4744,12314,13199 | 10 | 17 |
| | | 8 | 5772,8817,8836,11217,11616,13322,15866,17737 | 12 | 20 |
| | | 16 | 715,1069,1683,1959,2107,2443,2753,2986,3322,3746,4762,5305,11191,12802,14191,16158 | 14 | 22 |
| | 8 | 2 | 150,652 | 5 | 11 |
| | | 4 | 1101,3409,3806,13608 | 6 | 14 |
| | | 8 | 884,1131,1411,2809,2851,3439,4728,6757 | 8 | 17 |
| | | 16 | 333,568,586,659,843,1105,1127,1160,1396,1549,1768,2261,3858,4385,4901,5332 | 10 | 19 |
| | 16 | 2 | 556,2224 | 3 | 8 |
| | | 4 | 6258,8142,13708,15479 | 4 | 10 |
| | | 8 | 402,904,1094,1588,1736,2035,2716,3898 | 5 | 13 |
| | | 16 | 220,283,429,645,660,689,716,726,743,835,1021,1118,1202,1281,1467,1726 | 7 | 16 |
| | 32 | 2 | 3635,25022 | 2 | 6 |
| | | 4 | 194,430,713,803 | 3 | 9 |
| | | 8 | 225,601,679,754,894,1075,1182,1207 | 4 | 12 |
| | | 16 | 229,411,679,754,878,899,906,989,1207,1351,1675,1805,2292,2765,3368,4621 | 5 | 14 |

For descriptions of parts in Table 2, refer to the related descriptions in Table 1.

For example, that the characteristic polynomial is $x^9 + x^5 + 1$ is used as an example. Table 3 shows an example of initial value tables corresponding to the different N, M, and K when the sequence corresponding to each initial value is generated in the second implementation described in step S506.

**Table 3**

| N | M | K | Initial value table | TH1 | TH2 |
|---|---|---|---|---|---|
| 32 | 4 | 2 | 284,399 | 8 | 13 |
| | | 4 | 45,48,57,73 | 10 | 16 |
| | | 8 | 15,19,42,52,65,68,84,92 | 11 | 25 |
| | | 16 | 4,19,20,27,28,36,41,51,54,67,68,88,90,91,141,151 | 12 | 30 |
| | 8 | 2 | 1,24 | 5 | 8 |
| | | 4 | 4,18,25,36 | 6 | 13 |
| | | 8 | 8,11,13,15,24,31,39,50 | 7 | 24 |
| | | 16 | 11,24,39,40,50,57,70,84,95,137,184,278,306,407,426, 506 | 7 | 30 |
| | 16 | 2 | 10,18 | 3 | 5 |
| | | 4 | 72,83,111,315 | 3 | 13 |
| | | 8 | 33,58,69,74,93,114,148,167 | 4 | 24 |
| | | 16 | 3,16,42,45,50,53,57,68,74,77,86,96,108,126,140,145 | 5 | 30 |
| | 32 | 2 | 10,17 | 2 | 4 |
| | | 4 | 35,57,69,72 | 2 | 12 |
| | | 8 | 6,29,38,40,47,55,58,61 | 3 | 24 |
| | | 16 | 16,78,88,96,103,114,121,144,156,219,238,283,336,43 3,446,477 | 3 | 29 |

For related descriptions of parts in Table 3, also refer to the related descriptions in Table 1.

It can be learned from Table 1 to Table 3 that, according to the method provided in this embodiment of this application, a quantity of collisions between any two users can be greatly reduced, and the probability of the mutual interference between the plurality of users can be reduced.

Optionally, in this embodiment of this application, when the value of N is a fixed value, the value of N may not be shown in Table 1 to Table 3. In this case, when obtaining the target initial value, the different first devices may also obtain the target initial value based on only M and K and identifiers of the first devices. Alternatively, N has a maximum value. In this way, initial value tables corresponding to N less than the maximum value may all be determined based on an initial value table corresponding to the maximum value. For example, a set including some initial values included in the initial value table corresponding to the maximum value is used as the initial value table corresponding to N less than the maximum value.

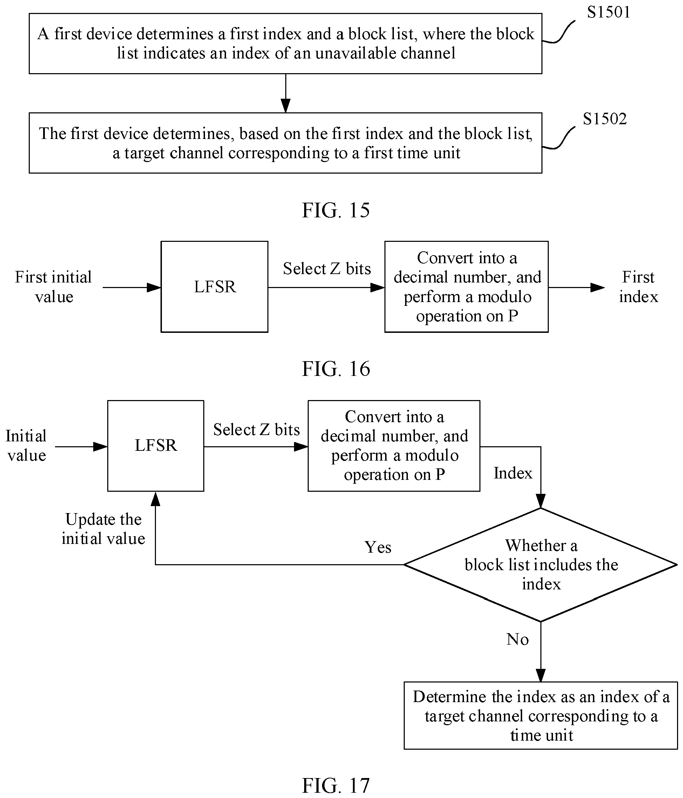

In addition to the foregoing method, as shown in FIG. 15, this application further provides a communication method. The method may be applicable to a narrowband-assisted UWB system. When the UWB system coexists with another system (for example, a Wi-Fi system), interference between the systems coexisting on the narrowband can be reduced.

It should be noted that, in this application, the method shown in FIG. 15 is not limited to be used only in the narrowband UWB system. The method may be further applied to another scenario, for example, may be further applied to a scenario in which a poll frame, a poll response frame, or a data frame is transmitted on the UWB channel, may be further applied to various scenarios such as synchronization, ranging, and sensing, or may be further applied to various scenarios related to channel selection. Refer to FIG. 15. The communication method includes the following steps.

S1501: A first device determines a first index and a block list.

Optionally, the first index may be essentially a random number. The first terminal device may determine the first index in various random number generation manners.

The block list includes an index of an unavailable channel in a target frequency band, and the target frequency band is a frequency band supported by the first terminal device. For example, the target frequency band may be a narrowband frequency band, for example, an unlicensed national information infrastructure (unlicensed national information infrastructure, UNII)-3 frequency band and/or a UNII-5 frequency band. A bandwidth of the UNII-3 frequency band is 125 megahertz (MHz), and a bandwidth of the UNII-5 frequency band is 500 MHz. The UNII-3 frequency band and the UNII-5 frequency band may be divided into a plurality of channels. In other words, the UNII-3 frequency band and the UNII-5 frequency band may include a plurality of channels. Certainly, the target frequency band may alternatively be a UWB frequency band or another frequency band. This is not specifically limited in this application.

Optionally, the unavailable channel may include a channel occupied by the another coexistent system (for example, the Wi-Fi system), or may include a channel with strong interference in the another coexistent system.

Optionally, the first device may determine the index of the unavailable channel in the target frequency band in a manner like channel monitoring. This is not specifically limited in this application.

Optionally, the block list in this application may also be referred to as a channel shielding list, a channel exclusion list, or the like. Certainly, the block list may alternatively have another name, and the name of the block list is not specifically limited in this application.

S1502: The first device determines, based on the first index and the block list, a target channel corresponding to a first time unit. The target channel corresponding to the first time unit is used to send a first radio frame to a second device.

Optionally, the first time unit may be a slot, for example, a frequency hopping slot (hopping slot) or a ranging slot (ranging slot). For example, a length of the first time unit may be 1 ms. Certainly, the length of the first time unit may alternatively be another value.

Optionally, in a ranging scenario, the first radio frame may be used for a basic configuration, time synchronization, and the like of a fragment. For example, the first radio frame may be a poll frame or a poll response frame. Alternatively, the first radio frame may indicate a timestamp related to a ranging fragment. For example, the first radio frame may be a data frame.

Based on this solution, the first device may determine the block list, to learn of the index of the unavailable channel in the target frequency band, and determine, based on the index of the unavailable channel, the target channel used to send the first radio frame in the first time unit. For example, the target channel corresponding to the first time unit may exclude the channel indicated in the block list, thereby reducing the interference between the systems coexisting on the narrowband.

For the first index in step S501,

in a first possible implementation, the first terminal device may determine the first index by using an LFSR, where an order of the LFSR may be X. For example, if X is equal to 9, a characteristic polynomial of the LFSR may be $x^9 + x^5 + 1$. If X is equal to 15, the characteristic polynomial of the LFSR may be $x^{15} + x + 1$.

Optionally, the first terminal device may determine a first initial value of the LFSR, and determine the first index based on the first initial value and the LFSR.

Optionally, the first initial value of the LFSR may be determined by at least one of the following seven parameters: a media access control MAC address of the first device, a clock of the first device, a MAC address of the second device, a clock of the second device, an index of the first time unit, an index of a ranging round (ranging round) in which the first time unit is located, or an index of a ranging block (ranging block) in which the first time unit is located. For example, the first time unit may be the frequency hopping slot or the ranging slot. Therefore, the index of the first time unit may be understood as an index of the frequency hopping slot or an index of the ranging slot. One ranging block may include a plurality of ranging rounds.

For example, a length of the first initial value of the LFSR is X bits. It is assumed that the first initial value is determined by Y (Y is a positive integer greater than or equal to 1 and less than or equal to 7) parameters in the seven parameters, and the first initial value may include some or all bits of each of the Y parameters. For example, that Y is equal to 3 and X is equal to 9 is used as an example. The first initial value may include four bits of a parameter 1, three bits of a parameter 2, and two bits of a parameter 3.

Optionally, as shown in FIG. 16, after the first initial value of the LFSR is determined, the first initial value may be input to the LFSR, Z bits are randomly selected from output bits of the LFSR, the Z bits are converted into a decimal number, and a modulo operation is performed on P based on the decimal number, to obtain the first index.

Z is a positive integer greater than or equal to $\lceil \log_2 P \rceil$, and $\lceil \ \rceil$ indicates rounding up. P is a total quantity of channels included in the target frequency band.

Optionally, in a ranging system, for example, in a system in which a ranging initiating device corresponds to a ranging responding device, or a ranging initiating device corresponds to a plurality of ranging responding devices, the plurality of ranging devices (including the ranging initiating device and the ranging responding device) need to use a same first initial value.

Optionally, in the first possible implementation, implementation of step S1502 may include: If the block list does not include the first index, the first device determines the first index as an index of the target channel corresponding to the first time unit; or if the block list includes the first index, the first device determines, based on a second index and the block list, the index of the target channel corresponding to the first time unit.

Optionally, the second index may be determined based on a second initial value. For specific implementation, refer to the foregoing related descriptions of determining the first index based on the first initial value. Details are not described herein again.

Optionally, the second initial value may be determined based on the first initial value, and/or the second initial value is greater than the first initial value. For example, Second initial value=First initial value+1, or Second initial value=First initial value+2.

Optionally, that the first device determines, based on a second index and the block list, the index of the target channel corresponding to the first time unit includes: If the block list does not include the second index, the first device determines the second index as the index of the target channel corresponding to the first time unit; or if the block list includes the second index, the first device determines, based on a third index and the block list, the index of the target channel corresponding to the first time unit.

Optionally, the third initial value is determined based on a third initial value, the third initial value may be determined based on the second initial value, and/or the third initial value is greater than the second initial value. For example, Third initial value=Second initial value+1, or Third initial value=Second initial value+2.

In other words, as shown in FIG. 17, if the index determined by the first device by using the LFSR is in the block list, the first device may update the initial value of the LFSR, to regenerate an index, and perform determining again. If the index determined by the first device by using the LFSR is not in the block list, the first device may output the index, and determine the index as the index of the target channel corresponding to the first time unit.

It should be noted that the foregoing method for determining the index by using the LFSR may be independently implemented without depending on the method shown in FIG. 15. In other words, the foregoing method for determining the index by using the LFSR and the method for determining whether the index is in the block list to determine the target channel may be combined or may be decoupled, and the two methods are independent of each other.

For example, after determining the first index by using the LFSR, the first device may not determine, by using the implementation of step S1502, the index of the target channel corresponding to the first time unit, but determine, in another manner, the target channel corresponding to the first time unit. For example, a correspondence between the first index and a channel index may be predefined. After the first index is determined, the channel index corresponding to the first index is determined as the index of the target channel corresponding to the first time unit. Certainly, the index of the target channel corresponding to the first time unit may be alternatively determined based on the first index in another manner. This is not specifically limited in this application.

Based on the first possible implementation, when there are a plurality of ranging links in the UWB system, ranging devices on the plurality of ranging links determine first indexes by using the LFSR, so that frequency hopping sequences generated by the plurality of ranging links have good cross-correlation. This reduces a possibility that ranging devices on different ranging links select a same channel to transmit radio frames, and reduces a collision of radio frames, thereby reducing interference between the ranging links. For example, the frequency hopping sequence may include an index of a channel used on the ranging link in a time period. The cross-correlation may refer to correlation between any two frequency hopping sequences.

In a second possible implementation, the first terminal device may determine the first index according to an advanced encryption standard (advanced encryption standard, AES) algorithm.

Optionally, the AES algorithm may be a 128-bit AES algorithm, namely, AES-128. Certainly, the algorithm may alternatively be an AES algorithm of another bit, for example, AES-192 or AES-256. This is not specifically limited in this application. The following uses AES-128 as an example for description.

Optionally, the first terminal device may first determine a first counter (counter) of the AES. The first counter may be 32 least significant bits in 128-bit plaintext. Then, the first index is determined based on the first counter, 96 most significant bits of the plaintext, a 128-bit key (key), and the AES-128 algorithm. The 96 most significant bits of the 128-bit plaintext may be predefined.

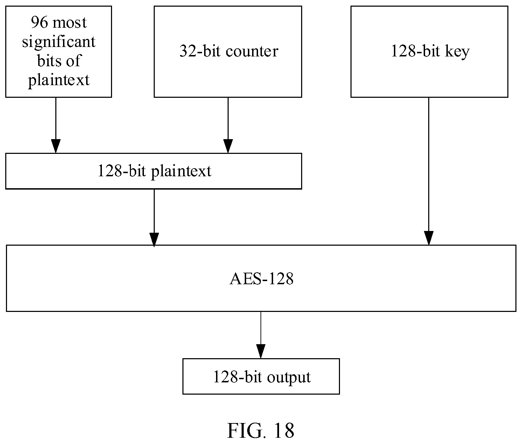

For example, as shown in FIG. 18, the 32-bit first counter, the 96 most significant bits of the plaintext (namely, the 128-bit plaintext), and the 128-bit key may be input to the AES-128 algorithm, to obtain a 128-bit output. Subsequently, the first index may be determined based on the 128-bit output, for example, after the 128-bit output is converted into the decimal number, the modulo operation is performed on the total quantity of channels, to obtain the first index.

Optionally, in the second possible implementation, implementation of step S1502 may include: If the block list does not include the first index, the first device determines the first index as an index of the target channel corresponding to the first time unit; or if the block list includes the first index, the first device determines, based on a second index and the block list, the index of the target channel corresponding to the first time unit.

Optionally, the second index is determined according to the AES algorithm. For example, the second index may be determined based on a second counter and according to the AES algorithm. For specific implementation, refer to the foregoing related descriptions of determining the first index by using the first counter and according to the AES algorithm. Details are not described herein again.

Optionally, the second counter may be determined by the first counter, and/or the second counter is greater than the first counter. For example, Second counter=First counter+1, or Second counter=First counter+2.

Optionally, for determining, by the first device based on the second index and the block list, the index of the target channel corresponding to the first time unit, refer to determining, by the first device based on the first index and the block list, the index of the target channel corresponding to the first time unit. In other words, if the index determined by the first device according to the AES is in the block list, the first device may update the counter of the AES, to regenerate an index, and perform determining again. If the index determined by the first device according to the AES is not in the block list, the first device may output the index, and determine the index as the index of the target channel corresponding to the first time unit.

Optionally, the frequency hopping shown in FIG. 15 may be performed based on the time unit. In other words, the first device may determine, by using the method shown in FIG. 15, a channel corresponding to each time unit used to send or receive a radio frame. In other words, the first device may further determine a target channel corresponding to a second time unit, and/or a target channel corresponding to a third time unit.

The target channel corresponding to the second time unit is used to send a second radio frame to the second device. For example, when the first device is the ranging responding device, the first radio frame may be, for example, the poll response frame, and the second radio frame may be, for example, the data frame. When the first device is the ranging initiating device, both the first radio frame and the second radio frame may be the poll frame.

The target channel corresponding to the third time unit is used to receive a third radio frame from the second device. For example, when the first device is the ranging responding device, the third radio frame may be the poll frame. When the first device is the ranging initiating device, the third radio frame may be the poll response frame or the data frame.

Optionally, for a method for determining the target channel corresponding to the second time unit and the target channel corresponding to the third time unit, refer to the foregoing method for determining the target channel corresponding to the first time unit. Details are not described herein again.

It should be noted that when the target channel/target channels corresponding to the second time unit and/or the third time unit are/is determined by using the LFSR, a value of the first initial value of the LFSR may be different from a value of the first initial value of the LFSR corresponding to the first time unit. When the target channel/target channels corresponding to the second time unit and/or the third time unit are/is determined according to the AES algorithm, a value of the first counter of the AES may be different from a value of the first counter corresponding to the first time unit.

Optionally, at least two of the target channel corresponding to the first time unit, the target channel corresponding to the second time unit, and the target channel corresponding to the third time unit are different. For example, the target channel corresponding to the first time unit is different from the target channel corresponding to the second time unit, or all the three channels are different.

Optionally, at least two of the first time unit, the second time unit, and the third time unit are located in a same ranging round.

In other words, in the solution provided in this application, channels corresponding to different time units that are in a same ranging round and that are used to send the radio frame may be different.

Although the first device may determine the channel corresponding to each time unit used to send or receive the radio frame, for a time unit, the first device may not finally use a channel that corresponds to the time unit and that is determined by the first device. Use, by the first device, of the channel corresponding to the time unit may be related to a first configuration.

Optionally, in the first configuration, it may be configured that radio frames are received and sent over a same channel in a same ranging round or ranging block; in the first configuration, it may be configured that radio frames are received and sent in a time unit over a channel corresponding to the time unit; or in the first configuration, it may be configured that a same channel is used for interaction of receiving and sending radio frames once. The interaction of receiving and sending radio frames once may mean that after the ranging initiating device sends a radio frame, the ranging responding device return a response frame in specific time (for example, in a next time unit).

Optionally, the first configuration may be carried in the poll frame, the response frame, or the data frame. The first configuration may be carried by using two bits. Different values of the two bits indicate different first configurations.

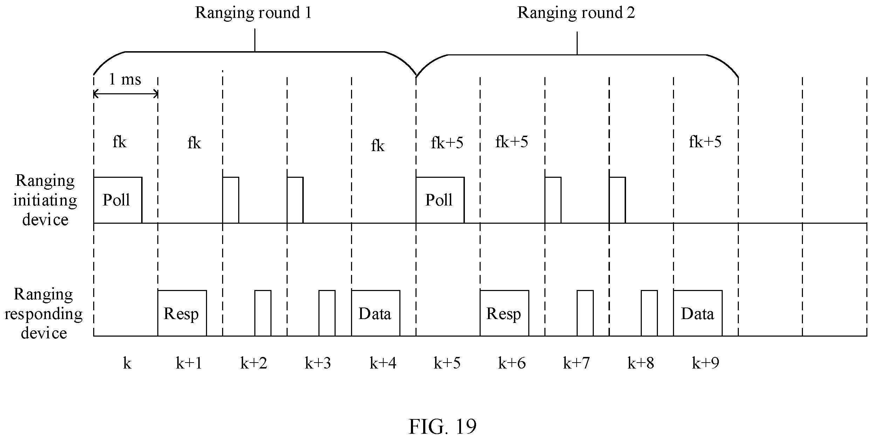

For example, it is configured that radio frames are received and sent over a same channel in a same ranging round, a time unit is the frequency hopping slot, and a length of the frequency hopping slot is 1 ms. As shown in FIG. 19, in a ranging round 1, it is assumed that a poll frame is located in a slot k, and the poll frame, a poll response frame, and a data frame in the ranging round 1 are all transmitted over a channel (indicated by fk in FIG. 19) corresponding to the slot k. Certainly, the three frames in the ranging round 1 may all be transmitted over a channel corresponding to a slot k+1 or a slot k+4. This is not specifically limited in this application.

In a next ranging round, namely, a ranging round 2, it is assumed that a poll frame is located in a slot k+5, and the poll frame, a poll response frame, and a data frame in the ranging round 2 are all transmitted over a channel (indicated by fk+5 in FIG. 19) corresponding to the slot k+5. Channels corresponding to the slot k and a slot k+5 may be determined by using the method shown in FIG. 15.

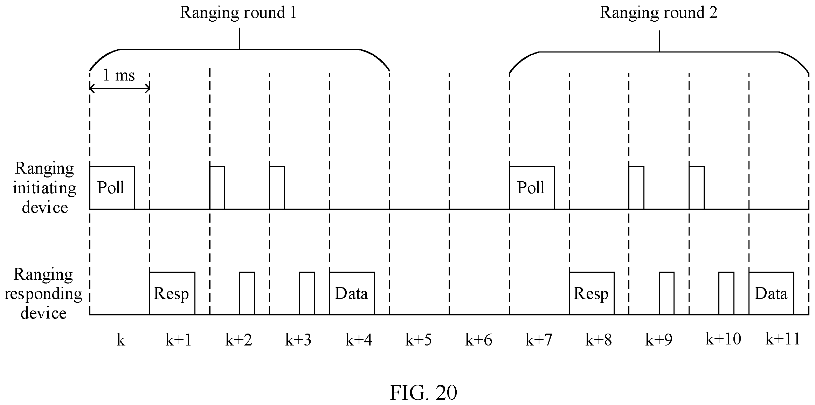

It should be noted that two ranging rounds may alternatively be discontinuous. For example, as shown in FIG. 20, there may be a plurality of slots between the ranging round 2 and the ranging round 1.

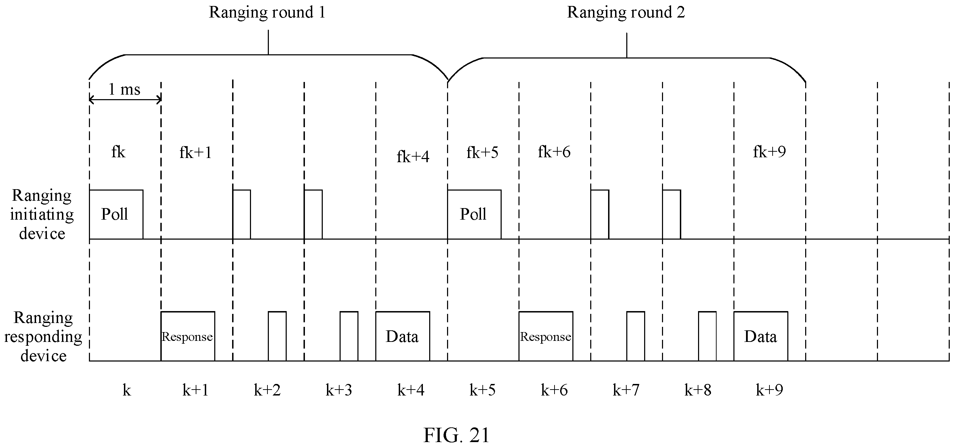

For example, it is configured that radio frames are received and sent in a time unit over a channel corresponding to the time unit, a time unit is the frequency hopping slot, and a length of the frequency hopping slot is 1 ms. As shown in FIG. 21, in the ranging round 1, it is assumed that the poll frame is located in the slot k, the poll response frame is located in the slot k+1, and the data frame is located in a slot k+4. In this case, the poll frame in the ranging round 1 may be transmitted over the channel (indicated by fk) corresponding to the slot k, the poll response frame may be transmitted over the channel (indicated by fk+1) corresponding to the slot k+1, and the data frame may be transmitted over a channel (indicated by fk+4) corresponding to the slot k+4. Implementation in the ranging round 2 is similar to that in the ranging round 1. Details are not described herein again.

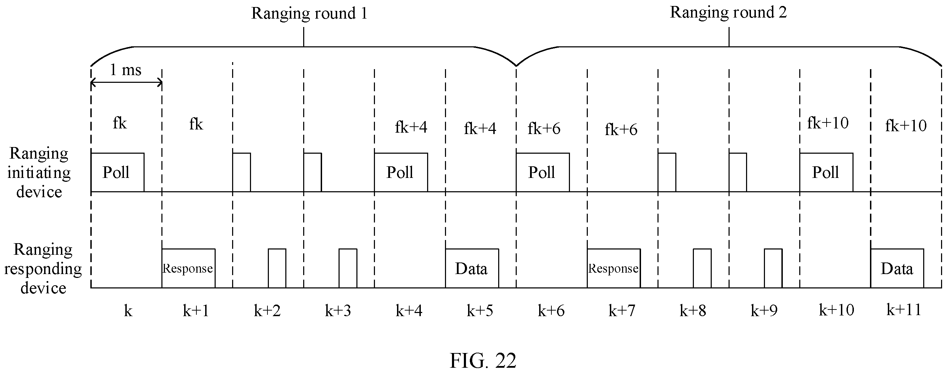

For example, it is configured that a same channel is used for interaction of receiving and sending radio frames once, a time unit is the frequency hopping slot, and a length of the frequency hopping slot is 1 ms. As shown in FIG. 22, in the ranging round 1, the poll frame in the slot k and the poll response frame in the slot k+1 are the interaction of receiving and sending radio frames once. In this case, the poll frame and the poll response frame may be transmitted over the channel corresponding to the slot k. In addition, in the ranging round 1, the poll frame in the slot k+4 and the data frame in the slot k+5 are the interaction of receiving and sending radio frames once. In this case, the poll frame and the data frame may be transmitted over the channel corresponding to the slot k+4. The implementation in the ranging round 2 is similar to that in the ranging round 1. Details are not described herein again.

Optionally, if a length of a radio frame exceeds one time unit, or a radio frame needs to be transmitted in a plurality of time units, the radio frame may be transmitted in the plurality of time units over a same channel.

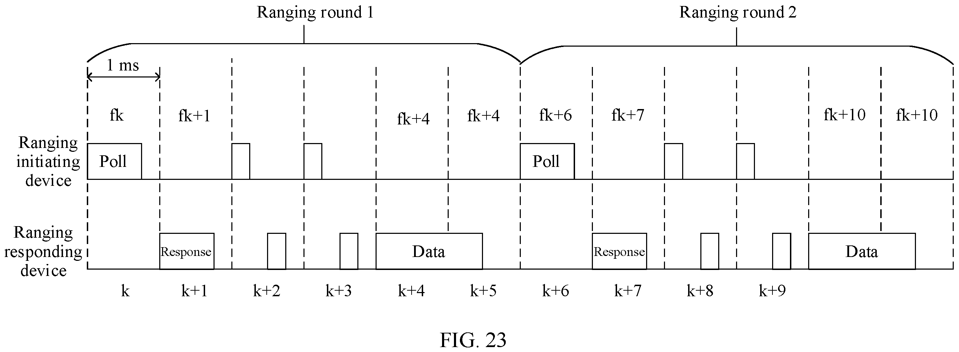

For example, as shown in FIG. 23, a length of the data frame in the ranging round 1 exceeds one slot. In this case, in both the slot k+4 and the slot k+5, the data frame may be transmitted over the channel corresponding to the slot k+4.

It should be noted that the method shown in FIG. 15 may be implemented in combination with the method shown in FIG. 5, or may be implemented independently of the method shown in FIG. 5. In other words, the method shown in FIG. 15 and the method shown in FIG. 5 do not depend on each other, and are decoupled from each other.

The foregoing mainly describes the solutions provided in embodiments of this application from a perspective of the methods. It may be understood that, to implement the foregoing functions, the communication apparatus (for example, the first device) includes a corresponding hardware structure and/or a software module for implementing each function. With reference to the units and algorithm steps described in embodiments disclosed in this application, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that this implementation goes beyond the scope of the technical solutions in embodiments of this application.

In embodiments of this application, the communication apparatus may be divided into functional modules based on the foregoing method examples. For example, each functional module may be obtained through division based on each corresponding function, or two or more functions may be integrated into one processing unit. The integrated unit may be implemented in a form of hardware, or may be implemented in a form of a software functional module. It should be noted that, in embodiments of this application, division into the units is an example, and is merely logical function division, and may be other division in an actual implementation.

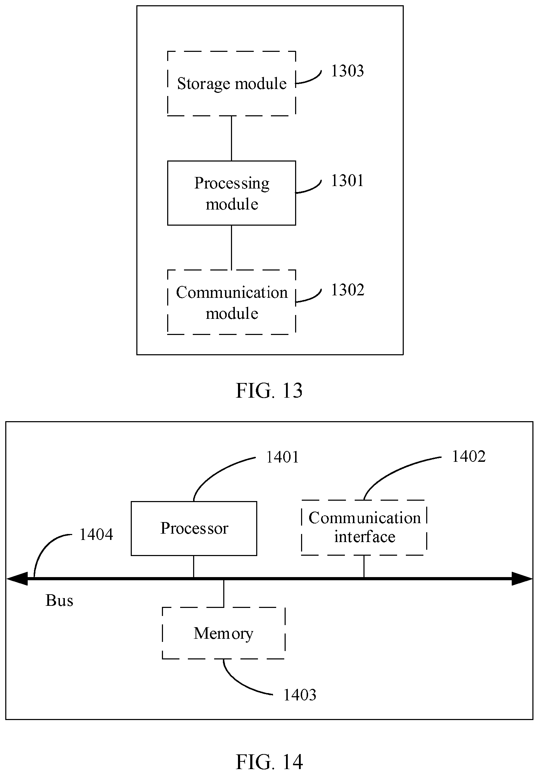

FIG. 13 shows a communication apparatus according to an embodiment of this application. The communication apparatus may be a first device, and the communication apparatus includes a processing module 1301.

In a possible implementation, the processing module 1301 is configured to support the first device in performing step S501 and step S502 in FIG. 5, and/or the processing module 1301 is configured to support the first device in performing step S503, step S504, and step S502 in FIG. 10, and/or the processing module 1301 is configured to support the first device in performing step S505 to step S507 and step S501 and step S502 in FIG. 11, and/or the processing module 1301 is configured to support the first device in performing step S505 and step S506, step S508 to step S512, and step S501 and step S502 in FIG. 12, and/or the processing module 1301 is configured to support another processing operation that needs to be performed by the first device in embodiments of this application.

In another possible implementation, the processing module 1301 is configured to support the first device in performing step S1501 and step S1502 in FIG. 15; and/or the processing module 1301 is configured to support another processing operation that needs to be performed by the first device in embodiments of this application.

Optionally, the communication apparatus may further include a communication module 1302, configured to communicate with another device (for example, a second device).

Optionally, the communication apparatus may further include a storage module 1303, configured to store program code and data of the communication apparatus. The data may include but is not limited to raw data, intermediate data, or the like.

The processing module 1301 may be a processor or a controller, for example, may be a CPU, a general-purpose processor, an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

The communication module 1302 may be a communication interface, a transceiver, a transceiver circuit, or the like. The communication interface is a collective name. In a specific implementation, the communication interface may include a plurality of interfaces, for example, an interface between a base station and a terminal and/or another interface.

The storage module 1303 may be a memory.

When the processing module 1301 is a processor, the communication module 1302 is a communication interface, and the storage module 1303 is a memory, the communication apparatus in this embodiment of this application may be as shown in FIG. 14.

As shown in FIG. 14, the communication apparatus includes a processor 1401 and a communication interface 1402. Optionally, the communication apparatus may further include a memory 1403. The memory 1403 may be independent of the processor 1401 and is coupled to the processor 1401 through an interface, or may be integrated with the processor 1401. Optionally, the communication apparatus may further include a bus 1404. The communication interface 1402, the processor 1401, and the memory 1403 may be connected to each other through the bus 1404. The bus 1404 may be a peripheral component interconnect (peripheral component interconnect, PCI) bus, an extended industry standard architecture (extended industry standard architecture, EISA) bus, or the like. The bus 1404 may be classified as an address bus, a data bus, a control bus, or the like. For ease of indication, only one thick line indicates the bus in FIG. 14, but this does not mean that there is only one bus or only one type of bus.

Optionally, an embodiment of this application further provides a computer program product carrying computer instructions. When the computer instructions are run on a computer, the computer is enabled to perform the method described in the foregoing embodiments.

Optionally, an embodiment of this application further provides a computer-readable storage medium. The computer-readable storage medium stores computer instructions. When the computer instructions are run on a computer, the computer is enabled to perform the method described in the foregoing embodiments.

Optionally, an embodiment of this application further provides a chip, including a processing circuit and an input/output interface. The processing circuit and the input/output interface are configured to implement the method described in the foregoing embodiments. The processing circuit is configured to perform a processing action in a corresponding method, and the input/output interface is configured to perform a receiving/sending action in a corresponding method.

Optionally, an embodiment of this application further provides a communication system, including the first device provided in the foregoing embodiments and the second device provided in the foregoing embodiments.

A person of ordinary skill in the art may understand that all or some of the foregoing embodiments may be implemented by software, hardware, firmware, or any combination thereof. When software is used to implement embodiments, all or some embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state drive (Solid-State Drive, SSD)), or the like.

In the several embodiments provided in this application, it should be understood that the disclosed system, apparatus, and method may be implemented in other manners. For example, the described apparatus embodiment is merely an example. For example, division into the modules is merely logical function division and may be other division in an actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

The units described as separate components may or may not be physically separate, and components displayed as units may or may not be physical units, that is, may be located in one position, or may be distributed on a plurality of devices. Some or all of the units may be selected based on actual requirements to achieve the objectives of the solutions of embodiments.

Based on the foregoing descriptions of the implementations, a person skilled in the art may clearly understand that this application may be implemented by software in addition to necessary universal hardware or by hardware only. In most circumstances, the former is a better implementation. Based on such an understanding, the technical solutions of this application essentially or the part making contribution may be implemented in a form of a software product. The computer software product is stored in a readable storage medium, such as a floppy disk, a hard disk, or an optical disc of a computer, and includes several instructions for instructing a computer device (which may be a personal computer, a server, or a network device) to perform the methods described in embodiments of this application.

**Claims**

1. A communication method, wherein the method comprises:

   obtaining, by a first device, a target initial value of a linear feedback shift register LFSR based on N, M, and K and an identifier of the first device, wherein N is a quantity of fragments comprised in a target signal sent by the first device to a second device, M is a quantity of time units comprised in a time period in which each fragment is transmitted, K is a quantity of first devices or K is a quantity of second devices, and N, M, and K are all positive integers; and
   determining, by the first device based on the target initial value and a characteristic polynomial, a time unit for transmitting each fragment, wherein an order of the characteristic polynomial is L, L is a positive integer, and the time unit for transmitting each fragment is one of M time units corresponding to the fragment.

2. The method according to claim 1, wherein the obtaining, by a first device, a target initial value of an LFSR based on N, M, and K and an identifier of the first device comprises:

   determining, by the first device, a target initial value table based on N, M, and K, wherein the target initial value table comprises at least two initial values; and
   obtaining, by the first device, the target initial value based on the identifier of the first device and the target initial value table.

3. The method according to claim 2, wherein the obtaining, by the first device, the target initial value based on the identifier of the first device and the target initial value table comprises:
   performing, by the first device, a modulo operation on the identifier of the first device and a size of the target initial value table, to obtain the target initial value, wherein the size of the target initial value table is a quantity of initial values comprised in the target initial value table.

4. The method according to any one of claims 1 to 3, wherein the determining, by the first device based on the target initial value and a characteristic polynomial, the time unit for transmitting each fragment comprises:

   generating, by the first device based on the target initial value and the characteristic polynomial, a first quantity of binary random numbers corresponding to each fragment; and
   converting, by the first device, the first quantity of binary random numbers corresponding to each fragment into a number with a target base, wherein the number with the target base corresponding to each fragment is used to determine the time unit for transmitting each fragment.

5. The method according to claim 4, wherein the first quantity is $\log_2 M$, and the number with the target base is a base-M number.

6. The method according to any one of claims 1 to 3, wherein the determining, by the first device based on the target initial value and a characteristic polynomial, the time unit for transmitting each fragment comprises:

   generating, by the first device based on the target initial value and the characteristic polynomial, a second quantity of binary random numbers corresponding to N fragments; and
   determining, by the first device based on the second quantity of binary random numbers and sequence numbers of the M time units, the time unit for transmitting each fragment.

7. The method according to claim 6, wherein a value of the second quantity is $N+L-1$; and the determining, by the first device based on the second quantity of binary random numbers and sequence numbers of the M time units, the time unit for transmitting each fragment comprises:

   generating, by the first device, a first vector based on the second quantity of binary random numbers, wherein the first vector comprises N integers greater than or equal to 0 and less than or equal to N-1;

generating, by the first device, a second vector based on the sequence numbers of the M time units, wherein the second vector comprises N elements; and

determining, by the first device based on the first vector and the second vector, the time unit for transmitting each fragment.

8. The method according to claim 7, wherein the determining, by the first device based on the first vector and the second vector, the time unit for transmitting each fragment comprises:

exchanging, by the first device, an $a^{th}$ bit of the second vector with a $b^{th}$ bit of the second vector, wherein b is a value of an $a^{th}$ bit of the first vector, a value of a ranges from 0 to N-1, and a is an integer; and

determining, by the first device based on an element in an exchanged second vector, the time unit for transmitting each fragment.

9. The method according to any one of claims 2 to 8, wherein before the determining, by the first device, a target initial value table based on N, M, and K, the method further comprises:

determining, by the first device, at least one initial value of the LFSR based on the order of the characteristic polynomial;

generating, by the first device based on the at least one initial value of the LFSR, a sequence corresponding to each initial value; and

generating, by the first device, the target initial value table based on the at least one initial value of the LFSR, the sequence corresponding to each initial value, and a preset threshold, wherein the preset threshold indicates a maximum quantity of collisions of fragments corresponding to any two target links, and the target link is a communication link corresponding to any one of K first devices.

10. The method according to claim 9, wherein the generating, by the first device based on the at least one initial value of the LFSR, a sequence corresponding to each initial value comprises:

generating, by the first device based on the at least one initial value of the LFSR and the characteristic polynomial, a third quantity of binary random numbers corresponding to each initial value;

converting, by the first device, the third quantity of binary random numbers corresponding to each initial value into a number with a target base corresponding to each initial value; and

generating, by the first device based on the number with the target base corresponding to each initial value, the sequence corresponding to each initial value.

11. The method according to claim 10, wherein a value of the third quantity is $N*\log_2 M$, the number with the target base is the base-M number, and the sequence corresponding to each initial value comprises N integers greater than or equal to 0 and less than or equal to M-1.

12. The method according to claim 9, wherein the generating, by the first device based on the at least one initial value of the LFSR, a sequence corresponding to each initial value comprises:

generating, by the first device based on the at least one initial value of the LFSR and the characteristic polynomial, a second quantity of binary random numbers corresponding to each initial value; and

generating, by the first device based on the second quantity of binary random numbers corresponding to each initial value and the sequence numbers of the M time units, the sequence corresponding to each initial value.

13. The method according to claim 12, wherein a value of the second quantity is $N+L$-1; and

the generating, by the first device based on the second quantity of binary random numbers corresponding to each initial value and the sequence numbers of the M time units, the sequence corresponding to each initial value comprises:

generating, by the first device based on the second quantity of binary random numbers corresponding to each initial value, a first vector corresponding to each initial value, wherein the first vector corresponding to each initial value comprises N integers greater than or equal to 0 and less than or equal to N-1;

generating, by the first device, a second vector based on the sequence numbers of the M time units, wherein the second vector comprises N elements; and

generating, by the first device based on the first vector corresponding to each initial value and the second vector, the sequence corresponding to each initial value.

14. The method according to claim 13, wherein the generating, by the first device based on the first vector corresponding to each initial value and the second vector, the sequence corresponding to each initial value comprises: exchanging, by the first device, an $a^{th}$ bit of the second vector with a $b^{th}$ bit of the second vector, wherein b is a value of an $a^{th}$ bit of the first vector corresponding to each initial value, a value of a ranges from 0 to N-1, a is an integer, and an exchanged second vector corresponding to each initial value is the sequence corresponding to each initial value.

15. The method according to any one of claims 9 to 14, wherein the generating, by the first device, the target initial value table based on the at least one initial value of the LFSR, the sequence corresponding to each initial value, and a preset threshold comprises:

determining, by the first device, a first sequence set based on the sequence corresponding to each initial value, wherein a maximum Hamming autocorrelation value of any sequence in the first sequence set is less than or equal to the preset threshold;
determining, by the first device, a second sequence set based on the first sequence set, wherein a maximum Hamming cross-correlation value between any two sequences in the second sequence set is less than or equal to the preset threshold; and
if a quantity of sequences comprised in the second sequence set is greater than or equal to K, generating, by the first device, the target initial value table based on an initial value corresponding to each sequence in the second sequence set; or
if a quantity of sequences comprised in the second sequence set is less than K, increasing, by the first device, a value of the preset threshold.

16. The method according to any one of claims 9 to 15, wherein an initial value of the preset threshold meets the following formula:

$$TH = floor(\frac{N}{M}),$$

wherein
TH is the initial value of the preset threshold, and floor indicates rounding down.

17. The method according to any one of claims 1 to 16, wherein a value of N is a fixed value.

18. The method according to any one of claims 1 to 17, wherein before the obtaining, by a first device, a target initial value of an LFSR based on N, M, and K and an identifier of the first device, the method further comprises: sending, by the first device, a target message to the second device, wherein the target message indicates the value of N, and/or a value of M, and/or a value of K.

19. The method according to claim 18, wherein the identifier of the first device is an index of a narrowband channel corresponding to the target message.

20. The method according to any one of claims 1 to 19, wherein the method further comprises:

determining, by the first device, a first index and a block list, wherein the block list comprises an index of an unavailable channel in a target frequency band, and the target frequency band is a frequency band supported by the first device; and
determining, by the first device based on the first index and the block list, a target channel corresponding to a first time unit, wherein the target channel is used to send a first radio frame to the second device, and the first radio frame and the target signal are located in a same ranging round.

21. A communication method, wherein the method comprises:

determining, by a first device, a first index and a block list, wherein the block list comprises an index of an unavailable channel in a target frequency band, and the target frequency band is a frequency band supported by the first device; and

determining, by the first device based on the first index and the block list, a target channel corresponding to a first time unit, wherein the target channel corresponding to the first time unit is used to send a first radio frame to a second device.

22. The method according to claim 21, wherein the method further comprises:
determining, by the first device, a target channel corresponding to a second time unit, wherein the target channel corresponding to the second time unit is used to send a second radio frame to the second device.

23. The method according to claim 22, wherein the method further comprises:
determining, by the first device, a target channel corresponding to a third time unit, wherein the target channel corresponding to the third time unit is used to receive a third radio frame from the second device.

24. The method according to claim 23, wherein

at least two of the target channel corresponding to the first time unit, the target channel corresponding to the second time unit, and the target channel corresponding to the third time unit are different; and/or
at least two of the first time unit, the second time unit, and the third time unit are located in a same ranging round.

25. The method according to any one of claims 21 to 24, wherein the determining, by a first device, a first index comprises:

determining, by the first device, a first initial value of a linear feedback shift register LFSR; and
determining, by the first device, the first index based on the first initial value and the LFSR.

26. The method according to claim 25, wherein the first initial value is determined by at least one of the following:
a media access control MAC address of the first device, a clock of the first device, a MAC address of the second device, a clock of the second device, an index of the first time unit, an index of a ranging round in which the first time unit is located, or an index of a ranging block in which the first time unit is located.

27. The method according to claim 25 or 26, wherein the determining, by the first device based on the first index and the block list, a target channel corresponding to a first time unit comprises:

if the block list does not comprise the first index, determining, by the first device, the first index as an index of the target channel corresponding to the first time unit; or
if the block list comprises the first index, determining, by the first device based on a second index and the block list, the index of the target channel corresponding to the first time unit, wherein the second index is determined based on a second initial value.

28. The method according to claim 27, wherein the second initial value is determined based on the first initial value, and/or the second initial value is greater than the first initial value.

29. The method according to any one of claims 21 to 24, wherein the determining, by a first device, a first index comprises:
determining, by the first device, the first index according to an advanced encryption standard AES algorithm.

30. The method according to claim 29, wherein the determining, by the first device based on the first index and the block list, a target channel corresponding to a first time unit comprises:

if the block list does not comprise the first index, determining, by the first device, the first index as an index of the target channel corresponding to the first time unit; or
if the block list comprises the first index, determining, by the first device based on a second index and the block list, the index of the target channel corresponding to the first time unit, wherein the second index is determined according to the AES algorithm.

31. A communication apparatus, wherein the communication apparatus comprises modules configured to perform steps in the method according to any one of claims 1 to 30.

32. A communication apparatus, wherein the communication apparatus comprises at least one processor; and
the processor is configured to execute a computer program or instructions, so that the method according to any one of claims 1 to 30 is performed.

33. A computer-readable storage medium, comprising a computer program or instructions, wherein when the computer program or the instructions are run on a communication apparatus, the communication apparatus is enabled to perform the method according to any one of claims 1 to 30.

34. A computer program product, wherein the computer program product comprises a computer program or instructions, and when the computer program or the instructions are run on a computer, the computer is enabled to perform the method according to any one of claims 1 to 30.

FIG. 1

FIG. 2

Fragment 1　　Fragment 2　　Fragment 3　　　　Fragment N

Poll

Ranging
link 1

t/ms

Fragment 2　　Fragment 3　　　　Fragment N
Fragment 1

Poll

Ranging
link 2

t/ms

FIG. 3

FIG. 4

A first device obtains a target initial value of an LFSR based on N, M, and K and an identifier of the first device

⤷ S501

The first device determines, based on the target initial value and a characteristic polynomial, a time unit for transmitting each fragment

⤷ S502

FIG. 5

Fragment 1      Fragment 2      Fragment 3

t/ms

Time period 1   1 ms   Time period 2   1 ms   Time period 3

FIG. 6

Fragment 1    Fragment 2    Fragment 3

Time unit 0, Time unit 1, Time unit 2, Time unit 3, Time unit 4

Time unit 0, Time unit 1, Time unit 2, Time unit 3, Time unit 4

Time period 1   1 ms   Time period 2   1 ms   Time period 3

t/ms

FIG. 7

FIG. 8

FIG. 9

A first device determines a target initial value table based on N, M, and K  — S503

The first device obtains a target initial value based on an identifier of the first device and the target initial value table  — S504

The first device determines, based on the target initial value and a characteristic polynomial, a time unit for transmitting each fragment  — S502

FIG. 10

A first device determines at least one initial value of an LFSR based on an order of a characteristic polynomial  — S505

The first device generates, based on the at least one initial value of the LFSR, a sequence corresponding to each initial value  — S506

The first device generates a target initial value table based on the at least one initial value of the LFSR, the sequence corresponding to each initial value, and a preset threshold  — S507

The first device obtains a target initial value of the LFSR based on N, M, and K and an identifier of the first device  — S501

The first device determines, based on the target initial value and the characteristic polynomial, a time unit for transmitting each fragment  — S502

FIG. 11

A first device determines at least one initial value of an LFSR based on an order of a characteristic polynomial — S505

The first device generates, based on the at least one initial value of the LFSR, a sequence corresponding to each initial value — S506

The first device determines a first sequence set based on the sequence corresponding to each initial value — S508

The first device determines a second sequence set based on the first sequence set — S509

The first device determines whether a quantity of sequences included in the second sequence set is greater than or equal to K — S510

No → The first device increases a value of a preset threshold — S512

Yes

The first device generates a target initial value table based on an initial value corresponding to each sequence in the second sequence set — S511

The first device obtains a target initial value of the LFSR based on N, M, and K and an identifier of the first device — S501

The first device determines, based on the target initial value and the characteristic polynomial, a time unit for transmitting each fragment — S502

FIG. 12

Storage module 1303

Processing module 1301

Communication module 1302

FIG. 13

1401

1402

Processor

Communication interface

1404

Bus

Memory

1403

FIG. 14

A first device determines a first index and a block list, where the block list indicates an index of an unavailable channel ⟋ S1501

The first device determines, based on the first index and the block list, a target channel corresponding to a first time unit ⟋ S1502

FIG. 15

First initial value → LFSR — Select Z bits → Convert into a decimal number, and perform a modulo operation on P → First index

FIG. 16

Initial value → LFSR — Select Z bits → Convert into a decimal number, and perform a modulo operation on P → Index

Update the initial value

Whether a block list includes the index

Yes

No

Determine the index as an index of a target channel corresponding to a time unit

FIG. 17

FIG. 18

EP 4 525 488 A1

FIG. 19

FIG. 20

EP 4 525 488 A1

FIG. 21

Ranging round 1

Ranging round 2

| | 1 ms | | | | | | | | | | | |
|---|---|---|---|---|---|---|---|---|---|---|---|---|

fk | fk | | | fk+4 | fk+4 | fk+6 | fk+6 | | | fk+10 | fk+10

Ranging
initiating
device

Poll | | | | Poll | | Poll | | | | Poll |

Ranging
responding
device

| Response | | | Data | | Response | | | | Data

k | k+1 | k+2 | k+3 | k+4 | k+5 | k+6 | k+7 | k+8 | k+9 | k+10 | k+11

FIG. 22

FIG. 23

INTERNATIONAL SEARCH REPORT

International application No.

**PCT/CN2023/096138**

### A. CLASSIFICATION OF SUBJECT MATTER

H04W 4/02(2018.01)i

According to International Patent Classification (IPC) or to both national classification and IPC

### B. FIELDS SEARCHED

Minimum documentation searched (classification system followed by classification symbols)

IPC: H04W, H04L, H04B

Documentation searched other than minimum documentation to the extent that such documents are included in the fields searched

Electronic data base consulted during the international search (name of data base and, where practicable, search terms used)

CNTXT, CNKI, 3GPP, WPABSC, ENTXTC: 超带宽, 线性反馈移位寄存器, 初始, 目标, 时间, 设备, 分段, 数目, 数量, 索引, 块, 列表, 频段, 频率, 信道, 无线帧, ultra, wide, band, UWB, LFSR, initial, target, time, device, section, number, index, block, list, frequency, channel, wireless, frame

### C. DOCUMENTS CONSIDERED TO BE RELEVANT

| Category* | Citation of document, with indication, where appropriate, of the relevant passages | Relevant to claim No. |
|---|---|---|
| A | US 7590090 B1 (LOCKHEED CORP.) 15 September 2009 (2009-09-15) description, paragraphs 5-31, and figures 1-2 | 1-34 |
| A | CN 110875805 A (HUAWEI TECHNOLOGIES CO., LTD.) 10 March 2020 (2020-03-10) description, paragraphs 4-137, and figures 1-6 | 1-34 |
| A | CN 112019473 A (HUAWEI TECHNOLOGIES CO., LTD.) 01 December 2020 (2020-12-01) entire document | 1-34 |
| A | WO 2022067825 A1 (HUAWEI TECHNOLOGIES CO., LTD.) 07 April 2022 (2022-04-07) entire document | 1-34 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 August 2023** | **29 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| US | 7590090 | B1 | 15 September 2009 | None | | | |
| CN | 110875805 | A | 10 March 2020 | WO | 2020042898 | A1 | 05 March 2020 |
| | | | | US | 2021185677 | A1 | 17 June 2021 |
| | | | | EP | 3840501 | A1 | 23 June 2021 |
| | | | | EP | 3840501 | A4 | 17 November 2021 |
| CN | 112019473 | A | 01 December 2020 | None | | | |
| WO | 2022067825 | A1 | 07 April 2022 | None | | | |

**REFERENCES CITED IN THE DESCRIPTION**

**Patent documents cited in the description**

* CN 202210582254

* CN 202210922472